# EUROPÄISCHE PATENTSCHRIFT

(11) **EP 3 974 072 B1**
(45) Veröffentlichungstag und Bekanntmachung des Hinweises auf die Patenterteilung: **19.07.2023**
(21) Anmeldenummer: 20198074.5
(22) Anmeldetag: 24.09.2020
(51) Int. Cl.: B21B 1/46, C21D 1/63, C21D 8/02

(54) **GIESS-WALZ-VERBUNDANLAGE UND VERFAHREN ZUM BETRIEB DER GIESS-WALZ-VERBUNDANLAGE**
CASTING ROLLER COMPOSITE SYSTEM AND METHOD FOR OPERATING THE CASTING ROLLER COMPOSITE SYSTEM
INSTALLATION COMBINÉE DE COULÉE ET DE LAMINAGE ET PROCÉDÉ DE FONCTIONNEMENT DE L'INSTALLATION COMBINÉE DE COULÉE ET DE LAMINAGE

(43) Veröffentlichungstag der Anmeldung: 30.03.2022
(73) Patentinhaber: Primetals Technologies Austria GmbH, 4031 Linz (AT)
(72) Erfinder: Rimnac, Axel, 4020 Linz (AT); Winkler, Roman, 4203 Altenberg (AT)
(74) Vertreter: Metals@Linz

(56) Entgegenhaltungen:
- WO-A1-2009/121678
- WO-A1-2014/029544
- WO-A1-2015/110648
- DE-A1-102013 220 657
- JP-A- H02 299 701

## Beschreibung

Die Erfindung betrifft eine Gieß-Walz-Verbundanlage gemäß Patentanspruch 1 und ein Verfahren zum Betrieb der Gieß-Walz-Verbundanlage gemäß Patentanspruch 10.

Aus WO 2009/121678 A1 ist ein Verfahren und eine Vorrichtung für eine Gieß-Walz-Verbundanlage mit einer Ausfördervorrichtung bekannt. Insbesondere zeigt die Schrift den Oberbegriff von Anspruch 1.

Es ist Aufgabe der Erfindung, eine verbesserte Gieß-Walz-Verbundanlage und ein verbessertes Verfahren zum Betrieb der Gieß-Walz-Verbundanlage bereitzustellen.

Diese Aufgabe wird mittels einer Gieß-Walz-Verbundanlage gemäß Patentanspruch 1 und eines Verfahrens zum Betrieb der Gieß-Walz-Verbundanlage gemäß Patentanspruch 10 gelöst. Vorteilhafte Ausführungsformen sind in den abhängigen Ansprüchen angegeben.

Es wurde erkannt, dass eine verbesserte Gieß-Walz-Verbundanlage dadurch bereitgestellt werden kann, dass die Gieß-Walz-Verbundanlage eine Vorwalzstraße, eine Ausfördereinrichtung, eine Abschreckeinrichtung, eine erste Transporteinrichtung und wenigstens eine Trenneinrichtung aufweist. Die Gieß-Walz-Verbundanlage ist zur Herstellung eines warmgewalzten Produkts aus einem stranggegossenen Warmstrang ausgebildet. Die Vorwalzstraße ist ausgebildet, einen stranggegossenen Warmstrang zu einem Vorwalzband zu walzen. Der Vorwalzstraße ist der Ausfördereinrichtung bezogen auf eine Förderrichtung des Vorwalzbands vorangestellt und zwischen der Vorwalzstraße und der Ausfördereinrichtung ist eine Trenneinrichtung angeordnet. Die Trenneinrichtung ist ausgebildet, einen ersten Teilabschnitt des Vorwalzbands in ein Vorwalzbandstück zu zerteilen. Die erste Transporteinrichtung verbindet den unmittelbar der Trenneinrichtung nachgeordneten Anlagenabschnitt mit der Abschreckeinrichtung und ist ausgebildet, das Vorwalzbandstück zu der Abschreckeinrichtung zu transportieren. Die Abschreckeinrichtung ist ausgebildet, das Vorwalzbandstück abzuschrecken. Die Ausfördereinrichtung ist ausgebildet, das Vorwalzbandstück auszufördern.

Diese Ausgestaltung der Gieß-Walz-Verbundanlage hat den Vorteil, dass das Vorwalzbandstück nach dem Abschrecken weiterverarbeitet werden kann und auf ein Verschrotten des ersten Teilabschnitts oder des Vorwalzbandstücks verzichtet werden kann. Insbesondere ist das Vorwalzbandstück geeignet, als Verschleißplatte eingesetzt zu werden. Dadurch weist die Gieß-Walz-Verbundanlage eine besonders hohe Ausbringung auf, sodass ein Anteil, der zu verschrotten ist, besonders gering ist. Dadurch kann auch der erste Teilabschnitt des Vorwalzbands, der beispielsweise mit einer ersten Gießgeschwindigkeit unterhalb einer vordefinierten Mindestgießgeschwindigkeit gegossen wurde, weiterverarbeitet werden.

Von besonderem Vorteil ist, wenn die Abschreckeinrichtung ein Abschreckbecken und eine Hebeeinrichtung aufweist, wobei das Abschreckbecken mit einer Kühlflüssigkeit, vorzugsweise Kühlwasser, füllbar ist. Die Hebeeinrichtung schließt sich in Förderrichtung des Vorwalzbandstücks an die erste Transporteinrichtung an und ist ausgebildet, das Vorwalzbandstück in das Abschreckbecken zum Abschrecken des Vorwalzbandstücks für ein vordefiniertes erstes Zeitintervall zu senken und aus dem Abschreckbecken nach Ablauf des ersten Zeitintervalls zu heben. Dadurch kann das Vorwalzbandstück umfangsseitig vollständig abgeschreckt und gehärtet werden. Zusätzlich kann in der Abschreckeinrichtung eine Zwangsumströmung des Vorwalzbandstücks beispielsweise mit Kühlflüssigkeit sichergestellt werden. Dadurch wird eine besonders hohe Abschreckgeschwindigkeit sichergestellt. Durch den Verbleib des Vorwalzbandstücks in dem Abschreckbecken wird ein hoher Anteil von Härtephasen wie beispielsweise Martensit in einer Randschicht des Vorwalzbandstücks sichergestellt.

In einer weiteren Ausführungsform ist die Hebeeinrichtung ausgebildet, das Vorwalzbandstück außerhalb der Kühlflüssigkeit für ein vordefiniertes zweites Zeitintervall zu halten, wobei die Hebeeinrichtung weiter ausgebildet ist, nach Ablauf des zweiten Zeitintervalls das Vorwalzbandstück wieder in das Abschreckbecken für ein drittes Zeitintervall zu senken und nach Ablauf des dritten Zeitintervalls wieder aus dem Abschreckbecken zu heben. Diese Ausgestaltung hat den Vorteil, dass während des zweiten Zeitintervalls ein noch heißer Kern des Vorwalzbandstücks die Randschicht des Vorwalzbandstücks erwärmt und dadurch ein Erholungsprozess und/oder ein Temperprozess in der Randschicht auftreten. Durch das nochmalige Eintauchen des Vorwalzbandstücks in die Kühlflüssigkeit wird das Vorwalzbandstück nochmals abgeschreckt, sodass nach dem dritten Zeitintervall das Vorwalzbandstück eine besonders dicke Randschicht mit angelassenen Nichtgleichgewichtsphasen wie beispielsweise Martensit oder Bainit aufweist.

In einer weiteren Ausführungsform weist die Abschreckeinrichtung wenigstens ein Abschreckaggregat auf, wobei durch das Abschreckaggregat das Vorwalzbandstück mit einer vordefinierten Geschwindigkeit transportierbar ist. Das Abschreckaggregat ist ausgebildet, eine Kühlflüssigkeit, vorzugsweise Wasser und/oder flüssigen Stickstoff, gerichtet auf das Vorwalzbandstück zur Abschreckung des Vorwalzbandstücks zu spritzen. Diese Ausgestaltung hat den Vorteil, dass die Abschreckgeschwindigkeit zielgenau eingestellt werden kann. Zusätzlich kann beispielsweise das Abschrecken mit flüssigem Stickstoff eine besonders hohe Abschreckgeschwindigkeit in einem Kern des Vorwalzbandstücks erzielt werden, sodass die Martensitbildung gegenüber dem Abschrecken mit Wasser erhöht ist und nach Abschrecken das Vorwalzbandstück einen besonders hohen Anteil von Martensit aufweist.

Die Gieß-Walz-Verbundanlage weist in einer weiteren Ausführungsform ein Vorwalzbandstücklager und eine zweite Transporteinrichtung auf, wobei die zweite Transporteinrichtung zumindest zwischen dem Vorwalzbandstücklager und Abschreckeinrichtung angeordnet ist. Die zweite Transporteinrichtung ist ausgebildet, das Vorwalzbandstück von der Abschreckeinrichtung zu dem Vorwalzbandstücklager zu transportieren und das Vorwalzbandstücklager ist ausgebildet, das Vorwalzbandstück für wenigstens 12 Stunden, vorzugsweise für wenigstens 24 Stunden, zu lagern. Diese Ausgestaltung hat den Vorteil, dass das Vorwalzbandstück in dem Vorwalzbandstücklager zur Weiterverarbeitung gelagert und abgekühlt werden kann.

In einer weiteren Ausführungsform weist die Gieß-Walz-Verbundanlage eine Fertigwalzstraße auf, wobei die Fertigwalzstraße der Ausfördereinrichtung bezogen auf die Förderrichtung des Vorwalzbands nachgeordnet ist, wobei die Fertigwalzstraße parallel zu der Abschreckeinrichtung angeordnet ist, wobei der Fertigwalzstraße ein zweiter Teilabschnitt des Vorwalzbands zuführbar ist, wobei die Fertigwalzstraße ausgebildet ist, den zweiten Teilabschnitt in ein Fertigwalzband zu walzen, wobei die Ausfördereinrichtung ausgebildet ist, der ersten Transporteinrichtung das Vorwalzbandstück zu übergeben, wobei die erste Transporteinrichtung ausgebildet ist, das Vorwalzbandstück zu der Abschreckeinrichtung zu transportieren. Dadurch kann auch eine hohe Qualität des Fertigwalzbands sichergestellt werden.

In einer weiteren Ausführungsform, weist die Gieß-Walz-Verbundanlage eine Fertigwalzstraße auf, wobei die Fertigwalzstraße der Vorwalzstraße bezogen auf die Förderrichtung des Vorwalzbands nachgeordnet ist, wobei der Fertigwalzstraße ein zweiter Teilabschnitt des Vorwalzbands zuführbar ist, wobei die Fertigwalzstraße einen ersten Betriebszustand und einen zum ersten Betriebszustand unterschiedlichen zweiten Betriebszustand aufweist, wobei die Ausfördereinrichtung bezogen auf die Förderrichtung des Vorwalzbands der Fertigwalzstraße nachgeordnet ist, wobei die Fertigwalzstraße die erste Transporteinrichtung ausgebildet und dazu eingerichtet ist, das Vorwalzbandstück in dem ersten Betriebszustand zu der Ausfördereinrichtung zu transportieren, wobei die Ausfördereinrichtung ausgebildet ist, das Vorwalzbandstück auszufördern, wobei die Fertigwalzstraße in dem zweiten Betriebszustand ausgebildet ist, den zweiten Teilabschnitt in ein Fertigwalzband zu walzen. Diese Ausgestaltung hat den Vorteil, dass Inline die Gieß-Walz-Verbundanlage aufgebaut ist und dadurch der seitliche Bauraumbedarf gering gehalten wird.

In einer weiteren Ausführungsform ist die Abschreckeinrichtung bezogen auf die Förderrichtung des Vorwalzbands zwischen der Vorwalzstraße und der Fertigwalzstraße angeordnet, wobei im ersten Betriebszustand die Fertigwalzstraße ausgebildet ist, das abgeschreckte Vorwalzbandstück zu der Ausfördereinrichtung zu transportieren. Diese Ausgestaltung hat den Vorteil, dass ein seitlicher Bauraum bedarf im Bereich zwischen der Vorwalzstraße und der Fertigwalzstraße gering gehalten wird.

In einer weiteren Ausführungsform ist die Abschreckeinrichtung bezogen auf die Förderrichtung des Fertigwalzbands zwischen der Fertigwalzstraße und Ausfördereinrichtung, wobei die Trenneinrichtung zwischen der Vorwalzstraße und der Fertigwalzstraße angeordnet ist, wobei in dem ersten Betriebszustand die Fertigwalzstraße ausgebildet ist, einen Querschnitt der Vorwalzbandstücks aufrecht zu erhalten. Die Abschreckeinrichtung und eine Kühleinrichtung zur Kühlung des Fertigbands kann integriert ausgebildet sein, sodass eine Baukomponentenanzahl gering ist.

Im Betrieb der oben beschriebenen Gieß-Walz-Verbundanlage wird ein endlos gegossener Warmstrang in der Vorwalzstraße zu einem Vorwalzband gewalzt. Die Trenneinrichtung zerteilt einen ersten Teilabschnitt des Vorwalzbands in ein Vorwalzbandstück. Die Ausfördereinrichtung fördert das Vorwalzbandstück aus. Die erste Transporteinrichtung transportiert das Vorwalzbandstück von der Trenneinrichtung zu der Abschreckeinrichtung. Die Abschreckeinrichtung schreckt das Vorwalzbandstück mit der Kühlflüssigkeit ab. Dadurch wird das Vorwalzbandstück gehärtet und weist, sofern das Vorwalzbandstück Stahl aufweist, nach dem Abschrecken einen besonders hohen Anteil an Martensit zumindest in einer Randschicht des Vorwalzbandstücks auf.

In einer weiteren Ausführungsform wird während des Abschreckens das Vorwalzbandstück der Kühlflüssigkeit für ein vordefiniertes erstes Zeitintervall ausgesetzt. Dabei wird während des ersten Zeitintervalls eine Randschicht des Vorwalzbandstücks abgeschreckt. Während des Abschreckens behält der Kern eine Restwärme. Nach Abschrecken des Vorwalzbandstücks wird das Vorwalzbandstück für ein zweites vordefiniertes Zeitintervall gelagert und der heiße Kern erwärmt die gehärtete Randschicht wieder. Nach Ablauf des zweiten Zeitintervalls wird das Vorwalzbandstück erneut der Kühlflüssigkeit für ein drittes vordefiniertes Zeitintervall ausgesetzt und abgeschreckt. Die Randschicht kann sich beispielsweise zwischen 10 Prozent und 25 Prozent einer Dicke des Vorwalzbandstücks von einer Außenfläche in Richtung des Kerns erstrecken. In einer weiteren Ausführungsform wird während des ersten Zeitintervalls die Randschicht des Vorwalzbandstücks von einer ersten Temperatur zwischen 1050°C und 1200°C auf eine zweite Temperatur T₂ von 150°C bis 400°C abgeschreckt, wobei der Kern des Vorwalzbandstücks die Randschicht im zweiten Zeitintervall auf eine dritte Temperatur zwischen 400°C und 600°C erwärmt. Im dritten Zeitintervall wird die Randschicht auf eine vierte Temperatur zwischen 100°C und 200°C abgeschreckt. Diese Ausgestaltung hat den Vorteil, dass während des zweiten Zeitintervalls ein Tempern und/oder eine Erholung zumindest in der Randschicht des Vorwalzbandstücks erfolgt. Durch das doppelte Abschrecken wird ein besonders günstiges Gefüge im Vorwalzbandstück erzielt das jenem eines auf der konventionellen Warmbandstraße erzeugten dicken Stahlbandes vorteilhafterweise entspricht. Ferner ist von Vorteil, wenn die Abschreckgeschwindigkeit im ersten und/oder dritten Zeitintervall zwischen 30°C bis 60°C pro Sekunde in einem Kern des Vorwalzbandstücks beträgt. Dadurch können besonders gut oberflächenverschleißfest Stähle hergestellt werden.

In einer weiteren Ausführungsform wird eine lokale Gießgeschwindigkeit über einen Guss des Warmstrangs aus einer metallischen Schmelze ermittelt. Die ermittelte lokale Gießgeschwindigkeit wird einer Vorwalzbandposition des Vorwalzbands zugeordnet. Der erste Teilabschnitt des Vorwalzbands wird auf Basis der zum Vorband zugeordneten lokalen Gießgeschwindigkeit unterhalb einer vordefinierten Mindestgießgeschwindigkeit ermittelt. Der erste Teilabschnitt kann beispielsweise ein Anfahrstrang sein. Auch kann bei einer Produktionsstörung, beispielsweise bei zu geringem Nachschub von metallischer Schmelze, der erste Teilabschnitt aus der Produktionsstörung resultieren. Diese Ausgestaltung hat den Vorteil, dass der erste Teilabschnitt des Vorwalzbands, das ungeeignet ist, um zum Fertigwalzband gewalzt zu werden, als Vorwalzbandstück weiterverarbeitet werden kann. Das Zerteilen des ersten Teilabschnitts des Vorwalzbands hat den Vorteil, dass die Abschreckeinrichtung und die erste Transporteinrichtung klein gehalten werden können.

In einer weiteren Ausführungsform wird ein zweiter Teilabschnitt des Vorwalzbands auf der Grundlage der zum Vorband zugeordneten lokalen Gießgeschwindigkeit oberhalb der vordefinierten Mindestgießgeschwindigkeit ermittelt, wobei der zweite Teilabschnitt der Fertigwalzstraße zugeführt wird. Die Fertigwalzstraße ist ausgebildet, den zweiten Teilabschnitt zu dem Fertigwalzband fertig zu walzen. Diese Ausgestaltung hat den Vorteil, dass der gesamte Warmstrang weiterverarbeitet wird und dadurch die Gieß-Walz-Verbundanlage einen besonders hohen Ertrag liefert.

In einer besonders vorteilhaften Ausführungsform weist die metallische Schmelze im Wesentlichen Stahl auf, wobei die Vorwalzstraße ausgebildet ist, den Warmstrang auf eine Dicke von 6 mm bis 45 mm zu walzen. Nach der Vorwalzstraße weist das Vorwalzband überwiegend Austenit mit einer Korngröße von 50 µm bis 100 µm auf.

In einer weiteren Ausführungsform wird das Vorwalzbandstück derart abgeschreckt, dass das Vorwalzbandstück in einer Randschicht von 10 bis 25 Prozent einer Dicke des Vorwalzbandstücks überwiegend Martensit, also zu wenigstens 50 %, aufweist.

Nachfolgend wird die Erfindung anhand von Figuren näher erläutert. Dabei zeigen:
FIG 1 eine schematische Darstellung einer Gieß-Walz-Verbundanlage gemäß einer ersten Ausführungsform;
FIG 2 ein Ablaufdiagramm eines Verfahrens zum Betrieb der in FIG 1 gezeigten Gieß-Walz-Verbundanlage;
FIG 3 einen Querschnitt durch ein Vorwalzbandstück;
FIG 4 ein Temperatur-Zeit-Diagramm des Vorwalzbandstücks während des in FIG 2 beschriebenen Verfahrens;
FIG 5 ein Diagramm über eine Zusammensetzung des Vorwalzbandstücks über eine Dicke des Vorwalzbandstücks in einer Mitte in Querrichtung des Vorwalzbandstücks nach einem achten Verfahrensschritt;
FIG 6 ein Temperatur-Zeit-Diagramm des Vorwalzbandstücks während einer Weiterbildung des in FIG 2 beschriebenen Verfahrens;
FIG 7 ein Diagramm über eine Zusammensetzung des Vorwalzbandstücks über die Dicke des Vorwalzbandstücks in der Mitte in Querrichtung des Vorwalzbandstücks nach einem sechsten Verfahrensschritt bei vollständigem Durchhärten des Vorwalzbandstücks; und
FIGN 8 bis 11 jeweils eine schematische Darstellung einer Gieß-Walz-Verbundanlage gemäß einer zweiten bis fünften Ausführungsform.

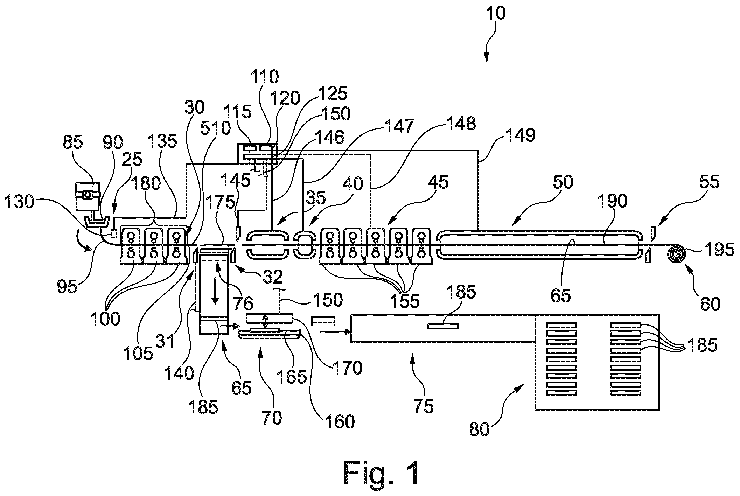

FIG 1 zeigt eine schematische Darstellung einer Gieß-Walz-Verbundanlage 10 gemäß einer ersten Ausführungsform.

Die Gieß-Walz-Verbundanlage 10 weist beispielsweise eine Stranggießanlage 25, eine erste bis dritte Trenneinrichtung 31, 32, 55, eine Zwischenheizung 35, einen Entzunderer 40, eine Fertigwalzstraße 45, eine Kühleinrichtung 50, eine Wickeleinrichtung 60, eine erste Transporteinrichtung 65, eine Abschreckeinrichtung 70, eine zweite Transporteinrichtung 75, eine Ausfördereinrichtung 76 und ein Vorwalzbandstücklager 80 auf.

Die Stranggießanlage 25 ist beispielhaft als Bogenstranggießanlage ausgebildet. Auch eine andere Ausgestaltung der Stranggießanlage 25 ist denkbar. Im Betrieb der Gieß-Walz-Verbundanlage 10 wird die Stranggießanlage 25 mittels einer Pfanne 85 mit einer metallischen Schmelze 90 befüllt. Die metallische Schmelze 90 kann beispielsweise mittels eines Konverters, beispielsweise eines Lichtbogenofens, oder in einem Linz-Donawitz-Verfahren hergestellt werden. Die metallische Schmelze 90 kann beispielsweise Stahl aufweisen. Die im Folgenden angegebenen Temperaturen beziehen sich jeweils darauf, dass die Gieß-Walz-Verbundanlage 10 mit Stahl als Werkstoff beschickt wird. Auch kann die metallische Schmelze 90 überwiegend einen Nichteisenwerkstoff aufweisen.

In der Stranggießanlage 25 wird die metallische Schmelze 90 zu einem Warmstrang 95 erstarrt. Von besonderem Vorteil ist hierbei, wenn die Stranggießanlage 25 den Warmstrang 95 im Endlosstrang (auch endless strip production genannt) gießt. In einer Förderrichtung des Warmstrangs 95 ist die Vorwalzstraße 30 der Stranggießanlage 25 nachgeordnet und folgt in der Ausführungsform direkt der Stranggießanlage 25.

Die Vorwalzstraße 30 kann ein oder mehrere Vorwalzgerüste 100 aufweisen, die in der Förderrichtung des Warmstrangs 95 hintereinander angeordnet sind. Die Anzahl der Vorwalzgerüste 100 ist im Wesentlichen frei wählbar und ist im Wesentlichen abhängig von einem Format des Warmstrangs 95. Die Vorwalzstraße 30 ist ausgebildet, den bei Zuführung in die Vorwalzstraße 30 heißen Warmstrang 95 zu einem Vorwalzband 105 zu walzen. Bei Zuführung des Warmstrangs 95 in die Vorwalzstraße 30 weist beispielsweise der Warmstrang 95 eine Temperatur von 1.100°C bis 1.200°C auf. Die Vorwalzstraße 30 walzt den Warmstrang 95 in das Vorwalzband 105. Das Vorwalzband 105 kann bei Verlassen der Vorwalzstraße 30 eine Dicke d von 6 mm bis 45 mm und eine erste Temperatur T₁ von 1050°C bis 1200°C aufweisen. In der Ausführungsform weist das Vorwalzband 105 die Dicke d von 40 mm als Beispiel auf.

Die erste und zweite Trenneinrichtung 31, 32 sind der Vorwalzstraße 30 bezogen auf die Förderrichtung des zum Vorwalzband 105 gewalzten Warmstrangs 95 nachgeordnet. Dabei kann die erste Trenneinrichtung 31 direkt der Vorwalzstraße 30 nachgeordnet sein zwischen der ersten Trenneinrichtung 31 und der zweiten Trenneinrichtung 32. Die zweite Trenneinrichtung 32 ist der Ausfördereinrichtung 76 bezogen auf die Förderrichtung des Vorwalzbands 105 nachgeordnet. Auf die zweite Trenneinrichtung 32 kann auch verzichtet werden. Die erste und/oder zweite Trenneinrichtung 31, 32 kann beispielsweise als Trommelschere oder als Pendelschere ausgebildet sein.

Zwischen der zweiten Trenneinrichtung 32 und der Fertigwalzstraße 45 kann die Zwischenheizung 35 angeordnet sein. Die Zwischenheizung 35 kann beispielsweise als Induktionsofen ausgebildet sein. Auch eine andere Ausgestaltung der Zwischenheizung 35 wäre denkbar. Die Zwischenheizung 35 ist bezogen auf die Förderrichtung des Vorwalzbands 105 der Fertigwalzstraße 45 und dem Entzunderer 40 vorgeordnet. Der Entzunderer 40 ist der Fertigwalzstraße 45 direkt vorgeordnet und der Zwischenheizung 35 direkt nachgeordnet.

Die Fertigwalzstraße 45 kann ein oder mehrere Fertigwalzgerüste 155 aufweisen. In der Ausführungsform sind beispielhaft fünf Fertigwalzgerüste 155 vorgesehen, die hintereinander bezogen auf die Fördereinrichtung des Vorwalzbands 105 angeordnet sind. Die Fertigwalzstraße 45 ist ausgebildet, das Vorwalzband 105 in Förderrichtung des Vorwalzbands 105 zu einem Fertigwalzband 190, beispielsweise zu einem Blech mit einer Enddicke von 0,5 mm bis 12,5 mm, beim Verlassen der Fertigwalzstraße 45 zu walzen.

Bezogen auf die Förderrichtung des Fertigwalzbands 190 schließt sich an die Fertigwalzstraße 45 die Kühleinrichtung 50 an. Auf einer zur Fertigwalzstraße 45 abgewandten Seite der Kühleinrichtung 50 ist die dritte Trenneinrichtung 55 angeordnet. Die dritte Trenneinrichtung 55 kann beispielsweise als Trommelschere oder Kurbelschere ausgebildet sein. Der dritten Trenneinrichtung 55 kann die Wickeleinrichtung 60 nachgeordnet sein.

Die erste Transporteinrichtung 65 beginnt an der Ausfördereinrichtung 76 und ist vorzugsweise als ein erster Rollengang ausgebildet. Weniger bevorzugt könnte die erste Transporteinrichtung 65 auch durch ein Hubgerät (engl. *aerial device,* z.B. ein Kran) realisiert werden. Die erste Transporteinrichtung 65 endet an der Abschreckeinrichtung 70.

Die Abschreckeinrichtung 70 weist in der Ausführungsform beispielhaft ein Abschreckbecken 160 und eine Hebeeinrichtung 170 auf. Das Abschreckbecken 160 kann mit einer Kühlflüssigkeit 165, beispielsweise Wasser, gefüllt sein. Zusätzlich kann der Kühlflüssigkeit 165 ein Additiv zugemengt sein, um beispielsweise korrosive Eigenschaften der Kühlflüssigkeit 165 zu mindern. Die Hebeeinrichtung 170 kann zwischen einer ersten Position und einer zweiten Position bewegt werden. In der ersten Position ist ein Ladebereich der Hebeeinrichtung 170 vollständig außerhalb des Abschreckbeckens 160 angeordnet. In der zweiten Position ist zumindest teilweise der Hebebereich der Hebeeinrichtung 170 in dem Abschreckbecken 160 versenkt.

Auf einer zur ersten Transporteinrichtung 65 abgewandten Seite der Abschreckeinrichtung 70 ist die zweite Transporteinrichtung 75 angeordnet. Die zweite Transporteinrichtung 75 kann beispielsweise als zweiter Rollengang ausgebildet sein. Auch kann beispielsweise die zweite Transporteinrichtung 75 einen Kran, einen Gabelstapler oder Ähnliches umfassen. Die zweite Transporteinrichtung 75 verbindet die Abschreckeinrichtung 70 mit dem Vorwalzbandstücklager 80.

Ferner kann die Gieß-Walz-Verbundanlage 10 ein Steuergerät 110 aufweisen. Das Steuergerät 110 weist beispielhaft eine Steuereinrichtung 115 und einen mit der Steuereinrichtung 115 verbundenen Datenspeicher 120 sowie eine mit der Steuereinrichtung 115 verbundene Schnittstelle 125 auf. In dem Datenspeicher 120 kann eine vordefinierte Mindestgießgeschwindigkeit abgespeichert sein. Ferner kann in dem Datenspeicher 120 ein Steuerprogramm zur Steuerung der Gieß-Walz-Verbundanlage 10 abgespeichert sein.

Des Weiteren kann die Gieß-Walz-Verbundanlage 10 wenigstens einen Sensor 130 aufweisen, wobei der Sensor 130 mittels einer ersten Datenverbindung 135 mit der Schnittstelle 125 verbunden ist. Ebenso kann zumindest die erste Trenneinrichtung 31 über eine zweite Datenverbindung 140 und die zweite Trenneinrichtung 32 über eine dritte Datenverbindung 145 mit der Schnittstelle 125 verbunden sein. Die Abschreckeinrichtung 70 kann mittels einer vierten Datenverbindung 150 mit der Schnittstelle 125 verbunden sein. Ebenso kann die Zwischenheizung 35, der Entzunderer 40, die Fertigwalzstraße 45 und die Kühleinrichtung 50 mittels einer zugeordneten fünften bis achten Datenverbindung 145, 146, 147, 148, 149 mit der Schnittstelle 120 verbunden sein. Die Datenverbindung 135, 140, 145, 146, 147, 148, 149, 150 kann beispielsweise Teil eines Industrienetzwerkes sein. Beispielsweise kann das Industrienetzwerk gemäß einem Ethercat-Standard betrieben werden.

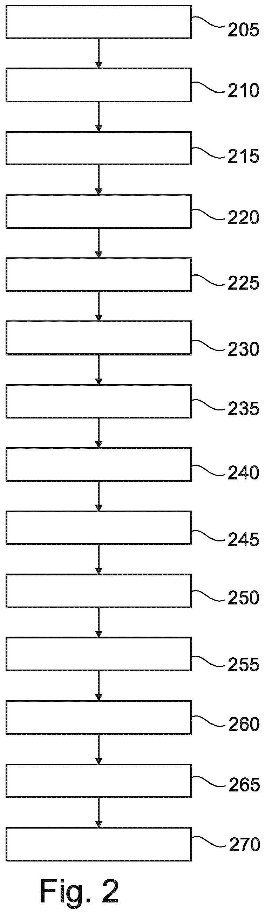

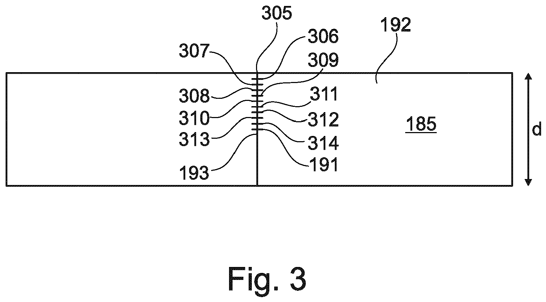

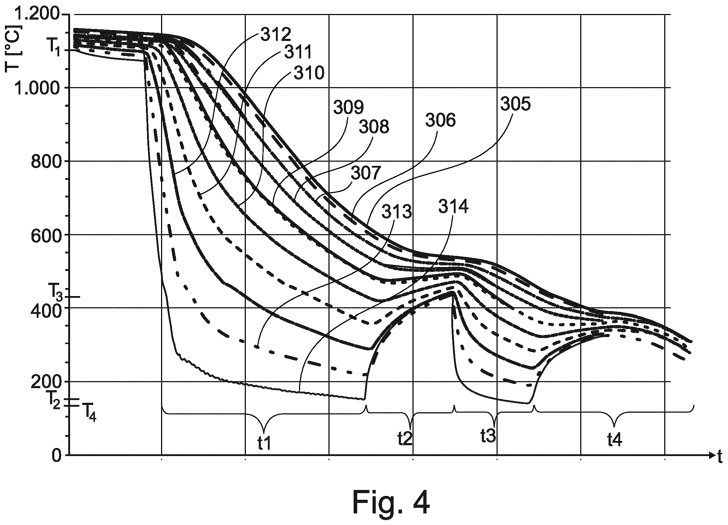

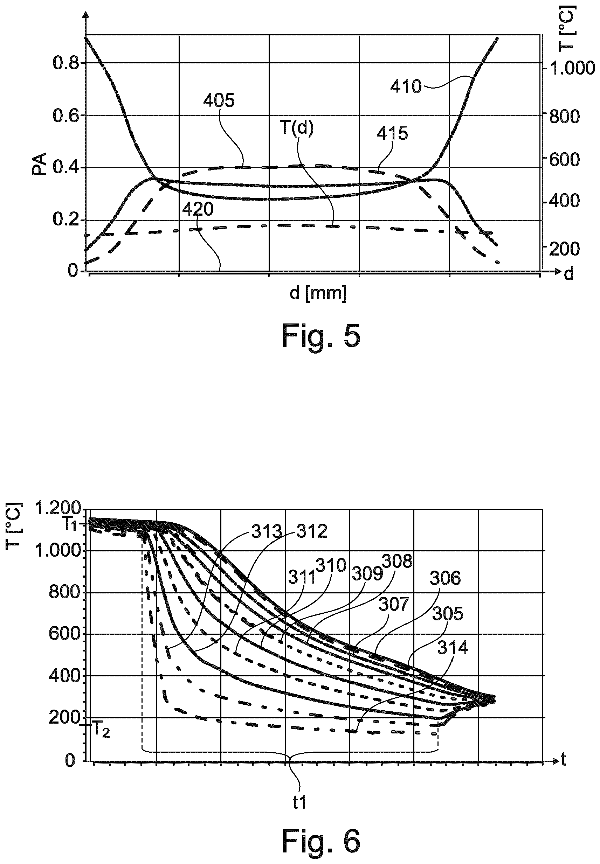

FIG 2 zeigt ein Ablaufdiagramm eines Verfahrens zum Betrieb der in FIG 1 gezeigten Gieß-Walz-Verbundanlage 10. FIG 3 zeigt einen Querschnitt durch ein Vorwalzbandstück 185. FIG 4 zeigt ein Temperatur-Zeit-Diagramm eines Vorwalzbandstücks 185 während des Verfahrens. FIG 5 zeigt ein Diagramm über eine Zusammensetzung des Vorwalzbandstücks 185 über die Dicke d des Vorwalzbandstücks 185 in einer Mitte 193 in Querrichtung des Vorwalzbandstücks 185 nach einem achten Verfahrensschritt 240.

Im Betrieb der Gieß-Walz-Verbundanlage 10 wird in einem ersten Verfahrensschritt 205 eine Kokille (in FIG 1 nicht dargestellt) der Stranggießanlage 25 mit einem Kaltstrangkopf verschlossen und durch zusätzliches Dichtmaterial abgedichtet. Mit der Pfanne 85 wird die metallische Schmelze 90 in einen Verteiler der Stranggießanlage 25 eingefüllt. Um den Strangguss zu beginnen, wird ein Stopfen von einem Gießrohr der Stranggießanlage 25 entfernt. Vorzugsweise ist beispielsweise die metallische Schmelze 90 ein Stahl, beispielsweise ein X70-Stahl. Auch kann die metallische Schmelze 90 einen anderen Werkstoff aufweisen.

Zu Beginn des Stranggusses umfließt die metallische Schmelze 90 in der Kokille den Kaltstrangkopf und verfestigt sich durch Abkühlung am Kaltstrangkopf. Der Kaltstrangkopf wird langsam aus der Kokille der Stranggießanlage 25 in Richtung Vorwalzstraße 30 gezogen. In Förderrichtung hinter dem Kaltstrangkopf kühlt die metallische Schmelze 90 in der Kokille an ihrer Kontaktfläche zu der Kokille ab und bildet eine Schale des Warmstrangs 95 aus. Die Schale umschließt einen noch flüssigen Kern 191 und hält den flüssigen Kern 191. Der Warmstrang 95 verlässt die Kokille am Kokillenausgang mit einer lokalen Gießgeschwindigkeit, die einem Bereich des Warmstrangs 95 zugeordnet ist. Am Kokillenausgang kann beispielsweise eine Dicke d des Warmstrangs 95 120 mm betragen. Der sich an den Kaltstrangkopf anschließende erste Teilabschnitt des Warmstrangs 95 kann auch als Anfangsstrang bezeichnet werden.

In der Stranggießanlage 25 wird der Warmstrang 95 weiter auf dem Weg zur Vorwalzstraße 30 abgekühlt, sodass sich der Warmstrang 95 von außen nach innen hin verfestigt. In der Ausführungsform ist beispielhaft die Stranggießanlage 25 als Bogenstranggießanlage ausgebildet, sodass durch eine Umlenkung des Warmstrangs 95 um im Wesentlichen 90° aus der Senkrechten der Warmstrang 95 in die Vorwalzstraße 30 im Wesentlichen im Horizontalen verlaufend zugeführt wird.

Die lokale Gießgeschwindigkeit kann beispielsweise mittels des Sensors 130 in einem zweiten Verfahrensschritt 210 ermittelt werden, wobei der Sensor 130 ein zur lokalen Gießgeschwindigkeit zugeordnetes Geschwindigkeitssignal über die erste Datenverbindung 135 der Schnittstelle 125 bereitstellt. Die Schnittstelle 125 erfasst das Geschwindigkeitssignal und stellt ihrerseits das Geschwindigkeitssignal der Steuereinrichtung 115 bereit. Mit der zugeordneten lokalen Gießgeschwindigkeit wird der Warmstrang 95 in die Vorwalzstraße 30 eingeleitet.

Mit zunehmender Dauer des Stranggusses kann der Stopfen weiter geöffnet werden, sodass mit einer Stabilisierung des Stranggusses des Warmstrangs 95 die lokale Gießgeschwindigkeit größer als zu Beginn des Stranggusses ist.

Im dritten Verfahrensschritt 215 werden der Kaltstrangkopf und der Warmstrang 95 durch die Vorwalzstraße 30 geführt. Die Vorwalzstraße 30 reduziert vorzugsweise die Dicke d des Warmstrangs 95 von beispielsweise 100 mm bis 400 mm auf 6 mm bis 45 mm zu dem Vorwalzband 105.

In einem vierten Verfahrensschritt 220 ordnet die Steuereinrichtung 115 die lokale Gießgeschwindigkeit des Warmstrangs 95 einer Vorwalzbandposition des Vorwalzbands 105 zu. Ferner ermittelt auf Grundlage der Vorwalzbandposition und der lokalen Gießgeschwindigkeit die Steuereinrichtung 115 einen ersten Teilabschnitt 175 des Vorwalzbands 105, dessen lokale Gießgeschwindigkeit die vordefinierte Mindestgießgeschwindigkeit unterschreitet und einen zweiten Teilabschnitt 180, dessen lokale Gießgeschwindigkeit die vordefinierte Mindestgießgeschwindigkeit überschreitet.

Üblicherweise schließt sich der erste Teilabschnitt 175 an den Kaltstrangkopf an und kann auch als Anfahrstrang bezeichnet werden. Der zweite Teilabschnitt 180 schließt sich an den ersten Teilabschnitt 175 auf einer dem Kaltstrangkopf abgewandten Seite bezogen auf die Förderrichtung des Vorwalzbands 105 an.

Der erste Teilabschnitt 175 weist eine Gefügestruktur auf, die auf Grund des langsamen Stranggusses und der geringen lokalen Gießgeschwindigkeit nicht fertigwalzfähig ist. Ferner ist der erste Teilabschnitt 175 durch die geringe Gießgeschwindigkeit soweit abgekühlt, dass er nicht warmwalzgeeignet ist. Durch das Gießen des zweiten Teilabschnitts 180 oberhalb der Mindestgießgeschwindigkeit ist die Temperatur des zweiten Teilabschnitts 180 ausgangsseitig der Vorwalzstraße 30 deutlich höher als des ersten Teilabschnitts 175 und ist dadurch warmwalzfähig.

Die Steuereinrichtung 115 zergliedert den ersten Teilabschnitt 175 in wenigstens ein, üblicherweise mehrere Vorwalzbandstücke 185. Dies kann notwendig sein, wenn der erste Teilabschnitt 175 in Förderrichtung des Vorwalzbands 105 länger ist als ein Abstand der ersten Trenneinrichtung 31 zu der zweiten Trenneinrichtung 32 oder eine Länge der Ausfördereinrichtung 76.

Die Steuereinrichtung 115 steuert in einem fünften Verfahrensschritt 225 die erste Trenneinrichtung 31 über die zweite Datenverbindung 140 derart an, dass der erste Teilabschnitt 175 in wenigstens ein oder mehrere Vorwalzbandstücke 185 zerteilt wird. Ferner steuert die Steuereinrichtung 115 die Ausfördereinrichtung 76 derart an, dass die Ausfördereinrichtung 76 das Vorwalzbandstück 185 der ersten Transporteinrichtung 65 zuführt, sodass das Vorwalzbandstück 185 nicht der Zwischenheizung 35 zugeführt wird.

In einem sechsten Verfahrensschritt 230 transportiert die erste Transporteinrichtung 65 das Vorwalzbandstück 185 zur Abschreckeinrichtung 70 und führt es der Abschreckeinrichtung 70 zu. Dabei weist das Vorwalzbandstück 185 über seine Dicke d eine im Wesentlichen identische erste Temperatur T₁ auf (vgl. FIG 4). Das abgetrennte Vorwalzbandstück 185 wird beispielsweise auf den Hebebereich der Hebeeinrichtung 170 transportiert.

In einem auf den sechsten Verfahrensschritt 230 folgenden siebten Verfahrensschritt 235 steuert die Steuereinrichtung 115 das Abschrecken. Dabei wird das noch heiße Vorwalzbandstück 185 in das Abschreckbecken 160 abgesenkt und abgeschreckt. Das Vorwalzbandstück 185 verbleibt für ein vordefiniertes erstes Zeitintervall t1 in der Kühlflüssigkeit 165 zum Abschrecken. Um eine besonders schnelle Abschreckung in dem Abschreckbecken 160 sicherzustellen, kann das Vorwalzbandstück 185 durch die Kühlflüssigkeit 165 zusätzlich zwangsumströmt werden. Dadurch stellt sich eine besonders hohe Abschreckgeschwindigkeit von wenigstens 30°C pro Sekunde ein. Das Vorwalzbandstück 185 wird von außen nach innen abgekühlt.

In FIG 4 sind ein erster bis zehnter Graphen 305 bis 314 dargestellt, wobei jeder Graph 305 bis 314 eine Temperatur des Vorwalzbandstücks 185 in der Mitte 193 des Vorwalzbandstücks 185 bei einer bestimmten Dickenposition des Vorwalzbandstücks 185 über das Verfahren hinweg darstellt. Ein Dickenabstand der Graphen 305 bis 314 beträgt beispielsweise 2 mm. So zeigt beispielsweise der erste Graph 305 den Temperaturverlauf über das Verfahren hinweg bei einer Dicke von 0 mm, also an einer Außenfläche des Vorwalzbandstücks 185, und der zehnte Graph 314 bei einer Dicke von 20 mm.

Nach Ablauf des vordefinierten ersten Zeitintervalls t1 wird das Vorwalzbandstück 185 aus dem Abschreckbecken 160 vollständig gehoben. Das vordefinierte erste Zeitintervall t1 ist dabei derart gewählt, dass der Kern 191 im Wesentlichen eine Temperatur von über 600°C bis 800°C am Ende des ersten Zeitintervalls t1 aufweist.

Das Vorwalzbandstück 185 in einem achten Verfahrensschritt 240 verbleibt für ein vordefiniertes zweites Zeitintervall t2 außerhalb des Abschreckbeckens 160. In dieser Zeit erwärmt der Kern 191 die Randschicht 192, sodass eine Rekristallisation in der Randschicht 192 erfolgt und ein Martensitanteil in der Randschicht 192 dadurch reduziert wird. Dabei bildet sich in der Randschicht 192 Austenit aus. Innerhalb des zweiten Zeitintervalls t2 erwärmt sich die Randschicht 192 auf eine Temperatur von 400°C bis 600°C, insbesondere 400°C bis 450°C, durch die Wärme des Kerns 191. Auf eine zusätzliche Wärmezufuhr zu dem Vorwalzbandstück 185 kann verzichtet werden.

Nach Ablauf des vordefinierten zweiten Zeitintervalls t2 wird in einem neunten Verfahrensschritt 245 das Vorwalzbandstück 185 nochmals in das Abschreckbecken 160 abgesenkt und abgeschreckt. Das Vorwalzbandstück 185 verbleibt für ein vordefiniertes drittes Zeitintervall t3 in der Kühlflüssigkeit 165 zum Abschrecken. Das dritte Zeitintervall t3 kann kürzer als das erste und/oder das zweite Zeitintervall t1, t2 sein. Die Zwangsumströmung kann zusätzlich nochmals aktiviert werden, sodass die Abschreckgeschwindigkeit im Abschreckbecken 160 besonders hoch ist.

Der siebte bis neunte Verfahrensschritt 235, 240, 245 können mehrfach wiederholt werden, bis auch der Kern 191 unterhalb einer vordefinierten Temperatur, beispielsweise 400°C, abgekühlt ist (vgl. FIG 5). Nach dem achten Verfahrensschritt 240 weist die im Wesentlichen d/4 dicke Randschicht 192 des Vorwalzbandstücks 185 überwiegend einen Phasenanteil PA von Martensit 410 mit einem geringeren Phasenanteil PA von Ferrit 405 und Perlit 415 auf. Im Kern 191 weist das Vorwalzbandstück 185 beispielsweise im Wesentlichen die Phasenanteile PA Ferrit 405 und Perlit 415 auf. Der Phasenanteil PA von Bainit 420 ist beispielsweise unter 1%. Der Phasenanteil PA von Martensit 410 fällt von außen nach innen hin ab.

Das gehärtete Vorwalzbandstück 185 wird nach Abschluss des Abschreckens von der Abschreckeinrichtung 70 an die zweite Transporteinrichtung 75 übergeben, wobei in einem zehnten Verfahrensschritt 250 die zweite Transporteinrichtung 75 das Vorwalzbandstück 185 ins Vorwalzbandstücklager 80 transportiert. In dem Vorwalzbandstücklager 80 können mehrere Vorwalzbandstücke 185 aufeinander gestapelt werden, sodass die Vorwalzbandstücke 185 flächig aneinander liegen. Durch eine Kernrestwärme des Kerns 191 jedes Vorwalzbandstücks erfolgt ein weiterer Temper- und Erholungsprozess der Randschicht 192. Die Vorwalzbandstücke 185 werden in dem Vorwalzbandstücklager 80 für ein vordefiniertes viertes Zeitintervall in dem Stapel gelagert. Nach Ablauf des vordefinierten Zeitintervalls können die im Stapel gelagerten Vorwalzbandstücke aus dem Stapel entnommen werden, um diese einzeln beabstandet zueinander zu lagern. Das vierte Zeitintervall kann 10 min bis 6 h betragen.

Im Vorwalzbandstücklager 80 werden die Vorwalzbandstücke 185 für wenigstens 12, vorzugsweise 24 Stunden, gelagert, sodass das gehärtete Vorwalzbandstück 185 in einem vierten Zeitintervall t4 auf Umgebungstemperatur abkühlt. Nach der Lagerung des Vorwalzstücks 185 im Vorwalzbandstücklager 80 kann das Vorwalzbandstück 185 weiterverarbeitet werden, beispielsweise zu einer Verschleißplatte. Das Vorwalzbandstück 185 kann nach Lagerung im Vorwalzbandstücklager 80 im Weiteren entsprechend abgelängt und zugeschnitten werden.

Nachdem der erste Teilabschnitt 175 über die Zerteilung im Vorwalzbandstück 185 vor der Zwischenheizung 35 ausgeschieden worden ist, wird in einem elften Verfahrensschritt 255 der zweite Teilabschnitt 180, der auf den ersten Teilabschnitt 175 folgt und dessen lokale Gießgeschwindigkeit höher als die vordefinierte Mindestgießgeschwindigkeit ist, durch die erste und zweite Trenneinrichtung 31, 32 geführt und der Zwischenheizung 35 zugeführt. Der zweite Teilabschnitt 180 wird kontinuierlich der Zwischenheizung 35 im elften Verfahrensschritt 255 zugeführt. Die Zwischenheizung 35 erwärmt den zweiten Teilabschnitt 180 des Vorwalzbands 105 von etwa 900°C auf eine vordefiniert Fertigwalztemperatur von 1.100°C bis 1.200°C. In dem der Zwischenheizung 35 nachgeschalteten Entzunderer 40 kann Zunder von einer Oberfläche des zweiten Teilabschnitts 180 entfernt werden. Beispielsweise kann der Zunder abgewaschen werden. Die Fertigwalzstraße 45 walzt mit den Fertigwalzgerüsten 155 den zweiten Teilabschnitt 180 von beispielsweise 6 bis 45 mm zu einem Fertigwalzband 190, das beispielsweise eine Dicke von 0,5 mm bis 12,5 mm bei Verlassen der Fertigwalzstraße 45 aufweist.

In einem auf den elften Verfahrensschritt 255 folgenden zwölften Verfahrensschritt 260 wird nach Verlassen der Fertigwalzstraße 45 das Fertigwalzband 190 durch die Kühleinrichtung 50 geführt. Die Kühleinrichtung 50 kühlt das Fertigwalzband 190 von einer Temperatur von etwa 800°C bis 950°C auf eine Temperatur von unter 170°C mit einer Abkühlrate von mehr als 10°C pro Sekunde ab. Der Fertigwalzband 190 ist mit dem zweiten Teilabschnitt 180 des Vorwalzbands 105 und dem Warmstrang 95 verbunden.

Am Ende der Gieß-Walz-Verbundanlage 10 wickelt die Wickeleinrichtung 60 das Fertigwalzband 190 in einem dreizehnten Verfahrensschritt 265 zu einer Coil 195 auf. Das Aufwickeln zu der Coil 195 kann auf einer Haspel oder einem Dorn erfolgen. Auch ein dornloses Aufwickeln ist denkbar.

Wenn die Coil 195 fertiggewickelt ist, trennt die dritte Trenneinrichtung 55 in einem vierzehnten Verfahrensschritt 270 das aufgewickelte Fertigwalzband 190 auf der Coil 195 von dem durch die Kühleinrichtung 50 laufenden Fertigwalzband 190 ab. Das aufgewickelte Fertigwalzband 190 auf der Coil 195 kann in ein nicht dargestelltes Fertiglager abtransportiert werden und dort weiter auf Umgebungstemperatur abgekühlt werden.

Die Fertigwalzstraße 45 kann parallel zu der Abschreckeinrichtung 70 den zweiten Teilabschnitt 180 des Vorwalzbands 105 zu dem Fertigwalzband 190 walzen. Auch kann kurzfristig die Fertigwalzstraße 45 leergelaufen sein, jedoch wird eine Betriebstemperatur in diesem Zustand der Fertigwalzstraße 45 aufrechterhalten, sodass nach Ausscheiden der Vorwalzbandstücke 185 mit dem Walzen des zweiten Teilabschnitts 180 durch die Fertigwalzstraße 45 begonnen werden kann.

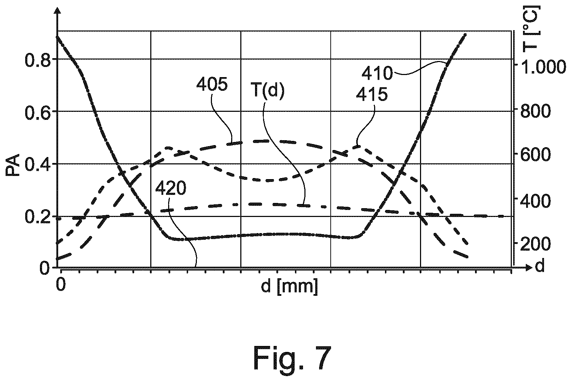

FIG 6 zeigt ein Temperatur-Zeit-Diagramm des Vorwalzbandstücks 185 während einer Weiterbildung des in FIG 2 beschriebenen Verfahrens. FIG 7 zeigt ein Diagramm über eine Zusammensetzung des Vorwalzbandstücks 185 über die Dicke d des Vorwalzbandstücks 185 in der Mitte 193 in Querrichtung des Vorwalzbandstücks 185 nach dem neunten Verfahrensschritt 245 bei vollständigem Durchhärten des Vorwalzbandstücks 185.

In einer Weiterbildung des in FIG 2 beschrieben Verfahrens wird auf den achten und neunten Verfahrensschritt 240, 245 verzichtet und im siebten Verfahrensschritt 230 verbleibt das Vorwalzbandstück 185 so lange im Abschreckbecken 160, bis das Vorwalzbandstück 185 durchgehärtet ist und im Kern 191 auf beispielsweise unter 200°C abgekühlt ist (vgl. FIG 6). Dadurch weist das Vorwalzbandstück 185 (vgl. FIG 7) über die Dicke d eine andere Zusammensetzung als die in FIG 5 gezeigte Zusammensetzung der Phasenanteile PA auf. Die Abwandlung hat den Vorteil, dass das Verfahren besonders einfach zu steuern ist. Der achte und neunte Verfahrensschritt 240, 245 haben den Vorteil, dass Zusammensetzungsspitzen der Phasenanteile PA in dem Vorwalzbandstück 185 vermieden werden und die Phasenanteile PA homogener als in FIG 7 gezeigt verteilt sind.

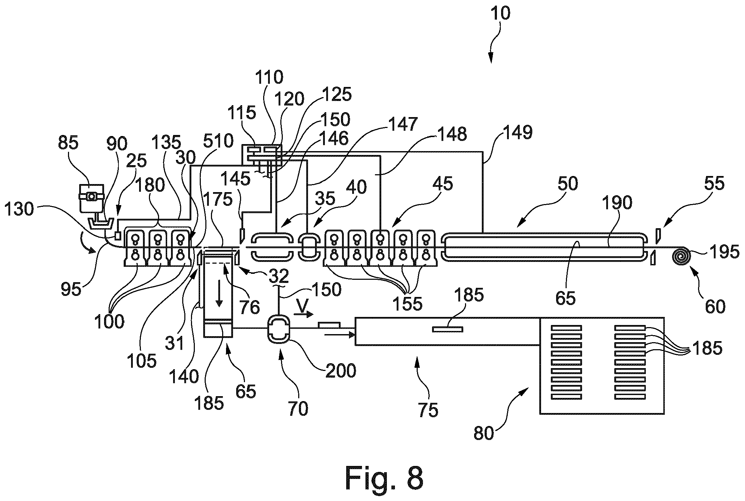

FIG 8 zeigt eine schematische Darstellung einer Gieß-Walz-Verbundanlage 10 gemäß einer zweiten Ausführungsform.

Die Gieß-Walz-Verbundanlage 10 ist im Wesentlichen identisch zu der in FIG 1 gezeigten Gieß-Walz-Verbundanlage 10 ausgebildet. Im Folgenden wird ausschließlich auf die Unterschiede der in FIG 8 gezeigten Gieß-Walz-Verbundanlage 10 gemäß der zweiten Ausführungsform gegenüber der in FIG 1 gezeigten ersten Ausführungsform eingegangen. Abweichend dazu weist die Abschreckeinrichtung 70 ein Abschreckaggregat 200 statt des Abschreckbeckens 160 und der Hebeeinrichtung 170 auf, wobei das Abschreckaggregat 200 zwischen der ersten Transporteinrichtung 65 und der zweiten Transporteinrichtung 75 angeordnet ist.

Die in FIG 8 gezeigte Gieß-Walz-Verbundanlage 10 kann im Wesentlichen mit dem in FIG 3 beschriebenen Verfahren betrieben werden. Im Folgenden wird ausschließlich auf die Unterschiede des Verfahrens zum Betrieb der in FIG 8 gezeigten Gieß-Walz-Verbundanlage 10 gegenüber dem in FIG 2 beschriebenen Verfahren eingegangen.

Während des siebten Verfahrensschritts 235 und des neunten Verfahrensschritts 245 wird zum Abschrecken des Vorwalzbandstückes 185 die Kühlflüssigkeit 165 in dem Abschreckaggregat 200 auf das Vorwalzbandstück 185 gespritzt und das Vorwalzbandstück 185 mit einer vordefinierten Geschwindigkeit v, beispielsweise 1,5 m/s, durch das Abschreckaggregat 200 geführt und dabei abgeschreckt. Die Kühlflüssigkeit 165 kann Wasser aufweisen. Alternativ kann auch flüssiger Stickstoff als Kühlflüssigkeit 165 in dem Abschreckaggregat 200 auf das Vorwalzbandstück 185 gespritzt werden. Das Vorwalzbandstück 185 wird mit der vordefinierten Geschwindigkeit v durch das Abschreckaggregat 200 von der ersten Transporteinrichtung 65 in Richtung der zweiten Transporteinrichtung 75 geführt. Die Kühlflüssigkeit 165 kühlt innerhalb des ersten Zeitintervalls t1 das Vorwalzbandstück 185 ab. Im zweiten Zeitintervall t2 kann im achten Verfahrensschritt 240 das Vorwalzbandstück 185 am Beginn der zweiten Transporteinrichtung 75 verbleiben. Im zweiten Zeitintervall t2 erwärmt der Kern 191 des Vorwalzbandstückes 185 die Randschicht 192.

Nach Ablauf des vordefinierten zweiten Zeitintervalls t2 wird im neunten Verfahrensschritt 245 das Vorwalzbandstück 185 beispielsweise von der zweiten Transporteinrichtung 75 in Richtung der ersten Transporteinrichtung 65 durch das Abschreckaggregat 200 nochmals geführt. Dabei wird durch das Abschreckaggregat 200 abermals Kühlflüssigkeit 165 auf das bereits abgeschreckte und in der Randschicht 192 wiedererwärmte Vorwalzbandstück 185 gespritzt und das Vorwalzbandstück 185 nochmals abgeschreckt. In der Ausführungsform werden der siebte bis neunte Verfahrensschritt 230 bis 240 so oft wiederholt, bis das Vorwalzbandstück 185 unterhalb einer Temperatur 400°C bis 450°C im Kern 191 abgekühlt ist. Das Vorwalzbandstück 185 wird dann von dem Abschreckaggregat 200 über die zweite Transporteinrichtung 75 zu dem Vorwalzbandstücklager 80 transportiert.

Die Verwendung des Abschreckaggregats 200 zum Abschrecken des Vorwalzbandstückes 185 hat den Vorteil, dass die Kühlflüssigkeit 165 mit besonders niedriger Temperatur, insbesondere auch flüssiger Stickstoff, auf das Vorwalzbandstück 185 gespritzt werden kann, sodass eine besonders hohe Abschreckgeschwindigkeit des Vorwalzbandstückes 185 sichergestellt werden kann.

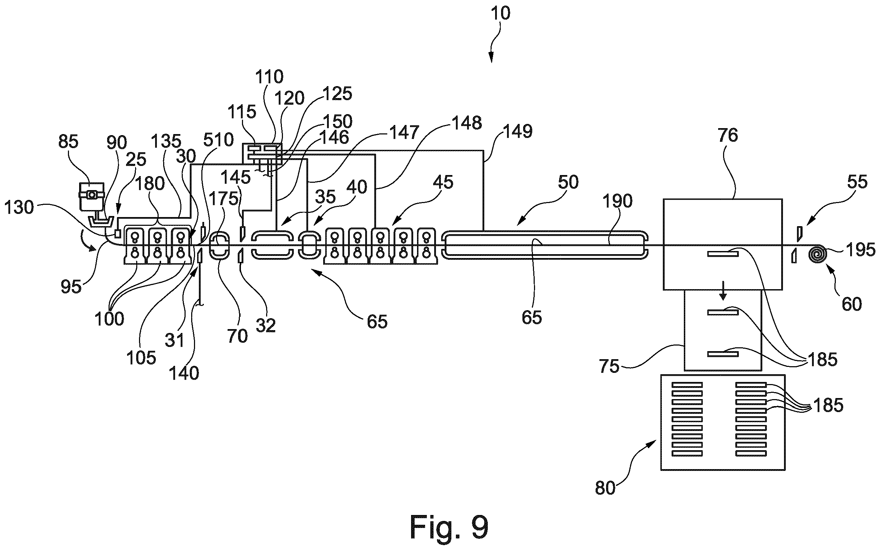

FIG 9 zeigt eine schematische Darstellung einer Gieß-Walz-Verbundanlage 10 gemäß einer dritten Ausführungsform.

Die Gieß-Walz-Verbundanlage 10 ist im Wesentlichen identisch zu der in FIG 1 gezeigten Gieß-Walz-Verbundanlage 10 ausgebildet. Im Folgenden wird ausschließlich auf die Unterschiede der in FIG 9 gezeigten Gieß-Walz-Verbundanlage 10 gemäß der dritten Ausführungsform gegenüber der in FIG 1 gezeigten ersten Ausführungsform eingegangen.

Zwischen der ersten Trenneinrichtung 31 und der zweiten Trenneinrichtung 32 ist an Stelle der Ausfördereinrichtung 76 die Abschreckeinrichtung 70 angeordnet. Abweichend zu FIG 1 weist die Abschreckeinrichtung 70 beispielsweise das in FIG 8 beschrieben Abschreckaggregat 200 statt des Abschreckbeckens 160 und der Hebeeinrichtung 170 auf.

Die Ausfördereinrichtung 76 ist bezogen auf die Förderrichtung des Fertigbands 190 der Kühlstrecke 50 und somit auch der Fertigwalzstraße 45 nachgeordnet und der dritten Trenneinrichtung 55 vorgeordnet.

Die erste Transporteinrichtung 65 erstreckt sich durch die Zwischenheizung 35, den Entzunderer 40, die Kühleinrichtung 50 und umfasst die Fertigwalzstraße 45 ausgebildet. Zusätzlich weist die erste Transporteinrichtung 65 einen Rollengang 510 auf, der ausgangsseitig die Vorwalzstraße 30 mit der Abschreckeinrichtung 70 verbindet. Die zweite Transporteinrichtung 75 verbindet in der in FIG 9 gezeigten Ausführungsform beispielhaft die Ausfördereinrichtung 76 mit dem Vorbandstücklager 80.

Die Fertigwalzstraße 45 weist einen ersten Betriebszustand und einen zweiten Betriebszustand auf. Im ersten Betriebszustand sind die Fertigwalzgerüste 155 geöffnet und bilden einen Art Rollengang aus. Im zweiten Betriebszustand ist die Fertigwalzstraße in einen Walzmodus geschaltet, um das Fertigwalzband 190 zu walzen.

Die in FIG 9 gezeigte Gieß-Walz-Verbundanlage 10 kann im Wesentlichen mit dem in FIG 2 beschriebenen Verfahren betrieben werden. Im Folgenden wird ausschließlich auf die Unterschiede des Verfahrens zum Betrieb der in FIG 9 gezeigten Gieß-Walz-Verbundanlage 10 gegenüber dem in FIG 2 beschriebenen Verfahren eingegangen.

Da die Abschreckeinrichtung 70 sich an die erste Trenneinrichtung 31 anschließt, ist der sechste Verfahrensschritt 230 integriert in den Transport des Vorbands 105.

Im siebten Verfahrensschritt 235 wird das Abschreckaggregat 200 durch die die Steuereinrichtung 115 aktiviert, sodass das Abschreckaggregat 200 das Vorwalzbandstück 185 mit der Kühlflüssigkeit bespritzt und abschreckt. Um das Vorwalzbandstück 185 über die gesamte Länge abzuschrecken, kann die Zwischenheizung 35 soweit von der Abschreckeinrichtung 70 räumlich entfernt sein, dass das Vorwalzbandstück 185 im siebten Verfahrensschritt 235 außerhalb der Zwischenheizung 35 ist.

Der achte Verfahrensschritt 240 wird dadurch durchgeführt, dass das abgeschreckte Vorwalzbandstück 185 durch die Zwischenheizung 35 in Richtung der Kühleinrichtung 50 mittels der ersten Transporteinrichtung 65 transportiert wird. Dabei deaktiviert die Steuereinrichtung 115 den Entzunderer 40, dahingehend, dass keine Entzunderung erfolgt. Die Zwischenheizung 35 kann aktiviert sein und den Temperprozess und Erholungsprozess in der Randschicht 192 unterstützen.

Im achten Verfahrensschritt 240 steuert die Steuereinrichtung 115 die Fertigwalzstraße 45 derart an, dass die Fertigwalzstraße 45 in den ersten Betriebszustand geschalten ist. Der Erholungs- und Temperprozess hält während des Transports der Vorwalzbandstücks 185 durch die Fertigwalzstraße 45 an. Der Transport von der Abschreckeinrichtung 70 zu der Kühleinrichtung 50 dauert das in FIG 2 beschriebene zweite Zeitintervall t2 an.

Im neunten Verfahrensschritt 245 aktiviert die Steuereinrichtung 115 die Kühleinrichtung 50 und die Kühleinrichtung 50 schreckt das Vorwalzbandstück 185 für das dritte Zeitintervall t3 ab.

Im zehnten Verfahrensschritt 250 wird das gehärtete Vorwalzbandstück 185 von der Kühleinrichtung 50 zu der Ausfördereinrichtung 76 transportiert. Die Ausfördereinrichtung 76 fördert das Vorwalzbandstück 185 aus und übergibt es der zweiten Transporteinrichtung 75. Die zweite Transporteinrichtung 75 transportiert das Vorwalzbandstück 185 zu dem Vorwalzbandstücklager 80.

Im elften Verfahrensschritt 255 deaktiviert die Steuereinrichtung 115 die Abschreckeinrichtung 70 und die erste Trenneinrichtung 31. Der zweite Teilabschnitt 180 des Vorwalzbands 105 wird durch die erste und zweite Trenneinrichtung 31, 32 und die Abschreckeinrichtung 70 unbearbeitet transportiert. Ferner aktiviert im elften Verfahrensschritt 255 die Steuereinrichtung 115 die Zwischenheizung 35 und den Entzunderer 40, sodass der zweite Teilabschnitt 180 durch die Zwischenheizung 35 erwärmt und durch den Entzunderer 40 entzundert wird. Die Steuereinrichtung 120 steuert im elften Verfahrensschritt 255 die Fertigwalzstraße 45 in den zweiten Betriebszustand, sodass die Fertigwalzstraße 45 den zweiten Teilabschnitt 180 zu dem Fertigwalzband 190 walzt.

Die Kühleinrichtung 50 ist im zwölften Verfahrensschritt 260 aktiviert und kühlt das Fertigband 190 ab.

Im dreizehnten Verfahrensschritt 265 wird das Fertigwalzband 190 durch die Ausfördereinrichtung 76 zu der Wickeleinrichtung 60 geführt und auf der Coil 195 aufgewickelt.

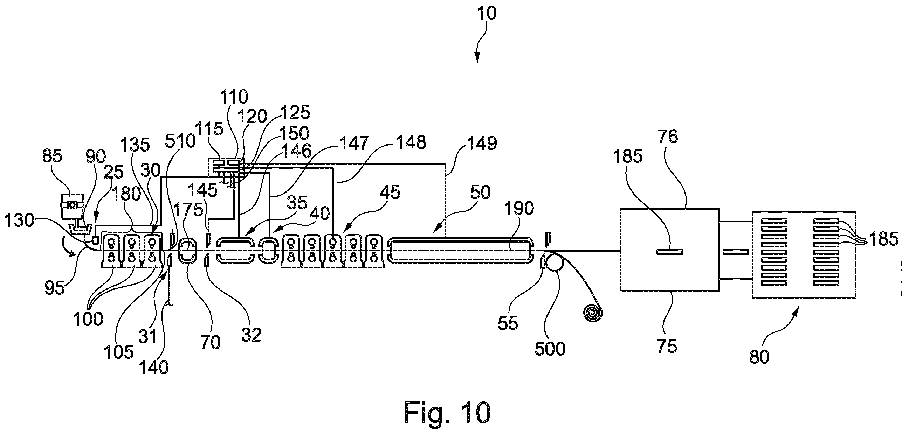

FIG 10 zeigt eine schematische Darstellung einer Gieß-Walz-Verbundanlage 10 gemäß einer vierten Ausführungsform.

Die Gieß-Walz-Verbundanlage 10 ist im Wesentlichen identisch zu der in FIG 9 gezeigten Gieß-Walz-Verbundanlage 10 ausgebildet. Im Folgenden wird ausschließlich auf die Unterschiede der in FIG 10 gezeigten Gieß-Walz-Verbundanlage 10 gemäß der vierten Ausführungsform gegenüber der in FIG 9 gezeigten dritten Ausführungsform eingegangen.

Abweichend zu FIG 9 ist eine Umlenkeinrichtung 500 ausgangsseitig der zweiten Trenneinrichtung 55 angeordnet. Der Umlenkeinrichtung 500 schließt sich in gerader Linie der Förderrichtung des Fertigwalzbands 190 in der Kühleinrichtung die Ausfördereinrichtung 76 an. Versetzt zu der geraden Linie der Förderrichtung des Fertigwalzbands 190 in der Kühleinrichtung 50 ist die Wickeleinrichtung 60 angeordnet.

Die in FIG 10 gezeigte Gieß-Walz-Verbundanlage 10 kann im Wesentlichen mit dem in FIG 9 beschriebenen Verfahren betrieben werden. Die in FIG 10 gezeigte Ausgestaltung hat den Vorteil, dass das Vorwalzbandstück 185 geradlinig transportiert werden kann und das leicht umlenkbare Fertigwalzband 190 durch die Umlenkeinrichtung 500, die beispielsweise eine Umlenkrolle aufweist, zu der Wickeleinrichtung 60 im dreizehnten Verfahrensschritt 265 umgelenkt werden kann.

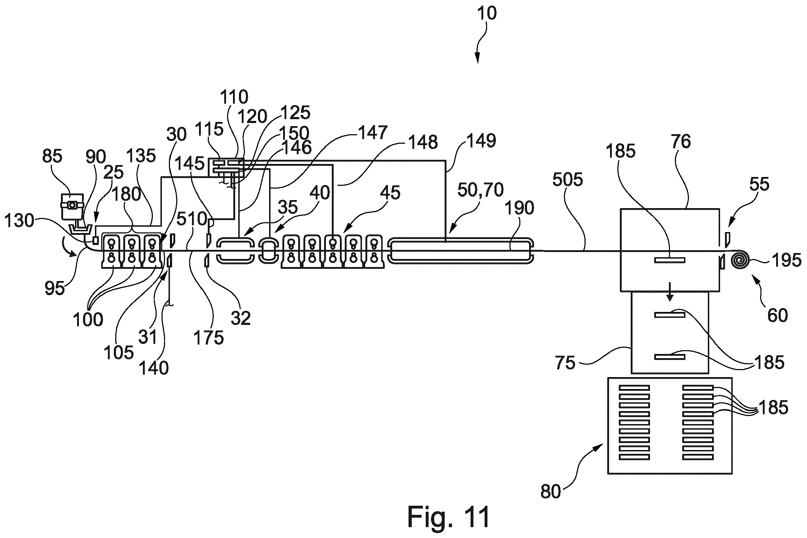

FIG 11 zeigt eine schematische Darstellung einer Gieß-Walz-Verbundanlage 10 gemäß einer fünften Ausführungsform.

Die Gieß-Walz-Verbundanlage 10 ist im Wesentlichen identisch zu der in FIG 9 gezeigten Gieß-Walz-Verbundanlage 10 ausgebildet. Im Folgenden wird ausschließlich auf die Unterschiede der in FIG 11 gezeigten Gieß-Walz-Verbundanlage 10 gemäß der fünften Ausführungsform gegenüber der in FIG 9 gezeigten dritten Ausführungsform eingegangen.

Die Abschreckeinrichtung 70 und die Kühleinrichtung 50 sind integriert ausgebildet. Ausgangsseitig der Kühleinrichtung 50 verbindet eine dritte Transporteinrichtung 505 die Ausfördereinrichtung 76 mit der Kühleinrichtung 50. Zwischen der ersten Trenneinrichtung 31 und der zweiten Trenneinrichtung 32 ist ein Rollengang 510 angeordnet, um das Vorwalzband 105 oder das Vorwalzbandstück 185 zwischen der ersten Trenneinrichtung 31 und der zweiten Trenneinrichtung 32 zu transportieren. Der Rollengang 510 ist Teil der ersten Transporteinrichtung 65.

Die in FIG 11 gezeigte Gieß-Walz-Verbundanlage 10 kann im Wesentlichen mit dem in FIG 9 beschriebenen Verfahren betrieben werden. Im Folgenden wird ausschließlich auf die Unterschiede des Verfahrens zum Betrieb der in FIG 11 gezeigten Gieß-Walz-Verbundanlage 10 gegenüber dem in FIG 9 beschriebenen Verfahren eingegangen.

Im sechsten Verfahrensschritt 230 kann die Steuereinrichtung 115 den Entzunderer 40 deaktivieren. Auch kann der Entzunderer 40 aktiviert sein. Die Zwischenheizung 35 kann durch die Steuereinrichtung 115 deaktiviert sein oder aktiviert sein. Ferner schaltet die Steuereinrichtung 115 die Fertigwalzstraße 45 in den ersten Betriebszustand.

Im sechsten Verfahrensschritt 230 transportiert der Rollengang 510 das Vorwalzbandstück 185 von der ersten Trenneinrichtung 31 zu der zweiten Trenneinrichtung 32 und in die Zwischenheizung 35. Von der Zwischenheizung 35 wird das heiße Vorwalzbandstück 185 durch den Entzunderer 40 in die Fertigwalzstraße 45 transportiert, die ihrerseits das Vorwalzbandstück in die integrierte Kühl-/Abschreckeinrichtung 50, 70 transportiert.

Durch die lang in Förderrichtung der Fertigwalzbands 190 ausgebildete Kühl-/Abschreckeinrichtung 50, 70 kann im siebten bis neunten Verfahrensschritt 235, 240, 245 das Vorwalzbandstück 185 in der integrierten Kühl-/Abschreckeinrichtung 50, 70 verbleiben, wobei im achten Verfahrensschritt 240 die Steuereinrichtung 120 die Kühl-/Abschreckeinrichtung 50, 70 deaktiviert und das Vorwalzbandstück 185 keine Abkühlung durch Kühlflüssigkeit erfährt. Dadurch wird der Erholungs- und Temperprozess in der Kühl-/Abschreckeinrichtung 50, 70 durchgeführt.

Die in FIG 11 gezeigte Ausführungsform hat den Vorteil, dass die Guss-Walzverbund-Anlage 10 besonders einfach und kostengünstig ausgebildet ist und der zusätzliche Bauraumbedarf gering gehalten ist.

Zusätzlich kann zu der in den FIGN 1 und 7 bis 11 gezeigten Ausführungsform der Gieß-Walz-Verbundanlage 10 ferner eine Anlassstrecke zwischen der Abschreckeinrichtung 70 und der zweiten Transporteinrichtung 75 vorgesehen sein, um nach Abschrecken des Vorwalzbandstückes 185 das Vorwalzbandstück 185 nochmals anzulassen.

Die in den FIGN gezeigte Gieß-Walz-Verbundanlage 10 und das Verfahren zum Betrieb der Gieß-Walz-Verbundanlage 10 stellt sicher, dass das Vorwalzbandstück 185 nicht verschrottet werden muss, sondern durch das Abschrecken zu beispielsweise verschleißfeste Platten weiterverarbeitet werden kann.

### Bezugszeichenliste

- 10: Gieß-Walz-Verbundanlage
- 25: Stranggießanlage
- 30: Vorwalzstraße
- 31: erste Trenneinrichtung
- 32: zweite Trenneinrichtung
- 35: Zwischenheizung
- 40: Entzunderer
- 45: Fertigwalzstraße
- 50: Kühleinrichtung
- 55: dritte Trenneinrichtung
- 60: Wickeleinrichtung
- 65: erste Transporteinrichtung
- 70: Abschreckeinrichtung
- 75: zweite Transporteinrichtung
- 76: Ausscheideeinrichtung
- 80: Vorwalzbandstücklager
- 85: Pfanne
- 90: metallische Schmelze
- 95: Warmstrang
- 100: Vorwalzgerüst
- 105: Vorwalzband
- 110: Steuergerät
- 115: Steuereinrichtung
- 120: Datenspeicher
- 125: Schnittstelle
- 130: Sensor
- 135: erste Datenverbindung
- 140: zweite Datenverbindung
- 145: dritte Datenverbindung
- 150: vierte Datenverbindung
- 155: Fertigwalzgerüst
- 160: Abschreckbecken
- 165: Kühlflüssigkeit
- 170: Hebeeinrichtung
- 175: erster Teilabschnitt
- 180: zweiter Teilabschnitt
- 185: Vorwalzbandstück
- 190: Fertigwalzband
- 191: Kern
- 193: Mitte
- 192: Randschicht
- 195: Coil
- 200: Abschreckgerüst

- 205: erster Verfahrensschritt
- 210: zweiter Verfahrensschritt
- 215: dritter Verfahrensschritt
- 220: vierter Verfahrensschritt
- 225: fünfter Verfahrensschritt
- 230: sechster Verfahrensschritt
- 235: siebter Verfahrensschritt
- 240: achter Verfahrensschritt
- 245: neunter Verfahrensschritt
- 250: zehnter Verfahrensschritt
- 255: elfter Verfahrensschritt
- 260: zwölfter Verfahrensschritt
- 265: dreizehnter Verfahrensschritt
- 270: vierzehnter Verfahrensschritt

- 305: erster Graph
- 306: zweiter Graph
- 307: dritter Graph
- 308: vierter Graph
- 309: fünfter Graph
- 310: sechster Graph
- 311: siebter Graph
- 312: achter Graph
- 313: neunter Graph
- 314: zehnter Graph

- 405: Ferrit
- 410: Martensit
- 415: Perlit
- 420: Bainit

- 500: Umlenkeinrichtung
- 505: dritte Transporteinrichtung
- 510: Rollengang

- tᵢ: i-tes Zeitintervall

## Patentansprüche

1. Gieß-Walz-Verbundanlage (10) zur Herstellung eines warmgewalzten Produkts aus einem endlos stranggegossenen Warmstrang (95),
- aufweisend eine Vorwalzstraße (30), eine Ausfördereinrichtung (76), eine erste Transporteinrichtung (65), und wenigstens eine Trenneinrichtung (31),
- wobei die Vorwalzstraße (30) ausgebildet ist, einen stranggegossenen Warmstrang (95) zu einem Vorwalzband (105) zu walzen,
- wobei der Vorwalzstraße (30) die Ausfördereinrichtung (76) bezogen auf eine Förderrichtung des Vorwalzbands (105) der Vorwalzstraße (30) nachgeordnet ist und zwischen der Vorwalzstraße (30) und der Ausfördereinrichtung (76) die Trenneinrichtung (31) angeordnet ist,
- wobei die Trenneinrichtung (31) ausgebildet ist, einen ersten Teilabschnitt (175) des Vorwalzbands (105) in ein Vorwalzbandstück (185) zu zerteilen,
- wobei die Ausfördereinrichtung (76) ausgebildet ist, das Vorwalzbandstück (185) auszufördern,
**gekennzeichnet durch**
- eine Abschreckeinrichtung (70),
- wobei die erste Transporteinrichtung (65) die Trenneinrichtung (31) mit der Abschreckeinrichtung (70) verbindet und ausgebildet ist, das Vorwalzbandstück (185) zu der Abschreckeinrichtung (70) zu transportieren,
- wobei die Abschreckeinrichtung (70) ausgebildet ist, das Vorwalzbandstück (185) abzuschrecken.

2. Gieß-Walz-Verbundanlage (10) nach Anspruch 1,
- wobei die Abschreckeinrichtung (70) ein Abschreckbecken (160) und eine Hebeeinrichtung (170) aufweist,
- wobei das Abschreckbecken (160) mit einer Kühlflüssigkeit (165), vorzugsweise mit einem Kühlwasser, füllbar ist,
- wobei die Hebeeinrichtung (170) sich in Förderrichtung des Vorwalzbandstücks (185) an die erste Transporteinrichtung (65) anschließt und ausgebildet ist, das Vorwalzbandstück (185) in das Abschreckbecken (160) zum Abschrecken des Vorwalzbandstücks (185) für ein vordefiniertes erstes Zeitintervall (t1) zu senken und aus dem Abschreckbecken (160) nach Ablauf des ersten Zeitintervalls (t1) zu heben.

3. Gieß-Walz-Verbundanlage (10) nach Anspruch 2,
- wobei die Hebeeinrichtung (170) ausgebildet ist, das Vorwalzbandstück (185) außerhalb der Kühlflüssigkeit (165) für ein vordefiniertes zweites Zeitintervall (t2) zu halten,
- wobei die Hebeeinrichtung (170) ausgebildet ist, nach Ablauf des zweiten Zeitintervalls (t2) das Vorwalzbandstück (185) wieder in das Abschreckbecken (160) für ein drittes Zeitintervall (t3) zu senken und nach Ablauf des dritten Zeitintervalls (t3) wieder aus dem Abschreckbecken (160) zu heben.

4. Gieß-Walz-Verbundanlage (10) nach einem der vorhergehenden Ansprüche,
- wobei die Abschreckeinrichtung (70) wenigstens ein Abschreckaggregat (200) aufweist,
- wobei durch das Abschreckaggregat (200) das Vorwalzbandstück (185) mit einer vordefinierten Geschwindigkeit (v) transportierbar ist,
- wobei das Abschreckaggregat (200) ausgebildet ist, eine Kühlflüssigkeit (165), vorzugsweise Wasser und/oder flüssigen Stickstoff, gerichtet auf das Vorwalzbandstück (185) zur Abschreckung des Vorwalzbandstücks (185) zu spritzen.

5. Gieß-Walz-Verbundanlage (10) nach einem der vorhergehenden Ansprüche,
- aufweisend ein Vorwalzbandstücklager (80) und eine zweite Transporteinrichtung (75),
- wobei die zweite Transporteinrichtung (75) zumindest zwischen dem Vorwalzbandstücklager (80) und der Abschreckeinrichtung (70) angeordnet ist,
- wobei die zweite Transporteinrichtung (75) ausgebildet ist, das Vorwalzbandstück (185) von der Abschreckeinrichtung (70) zu dem Vorwalzbandstücklager (80) zu transportieren,
- wobei das Vorwalzbandstücklager (80) ausgebildet ist, das Vorwalzbandstück (185) für wenigstens 12 Stunden, vorzugsweise für wenigstens 24 Stunden, zu lagern.

6. Gieß-Walz-Verbundanlage (10) nach einem der vorhergehenden Ansprüche,
- aufweisend eine Fertigwalzstraße (45),
- wobei die Fertigwalzstraße (45) der Ausfördereinrichtung (76) bezogen auf die Förderrichtung des Vorwalzbands (105) nachgeordnet ist,
- wobei die Fertigwalzstraße (45) parallel zu der Abschreckeinrichtung (70) angeordnet ist,
- wobei der Fertigwalzstraße (45) ein zweiter Teilabschnitt (180) des Vorwalzbands (105) zuführbar ist,
- wobei die Fertigwalzstraße (45) ausgebildet ist, den zweiten Teilabschnitt (180) in ein Fertigwalzband (190) zu walzen,
- wobei die Ausfördereinrichtung (76) ausgebildet ist, der ersten Transporteinrichtung (65) das Vorwalzbandstück _(185) zu übergeben,
- wobei die erste Transporteinrichtung (65) ausgebildet ist, das Vorwalzbandstück (185) zu der Abschreckeinrichtung (70) zu transportieren.

7. Gieß-Walz-Verbundanlage (10) nach einem der Ansprüche 1 bis 5,
- aufweisend eine Fertigwalzstraße (45),
- wobei die Fertigwalzstraße (45) der Vorwalzstraße (30) bezogen auf die Förderrichtung des Vorwalzbands (105) nachgeordnet ist,
- wobei der Fertigwalzstraße (45) ein zweiter Teilabschnitt (180) des Vorwalzbands (105) zuführbar ist,
- wobei die Fertigwalzstraße (45) einen ersten Betriebszustand und einen zum ersten Betriebszustand unterschiedlichen zweiten Betriebszustand aufweist,
- wobei die Ausfördereinrichtung (76) bezogen auf die Förderrichtung des Vorwalzbands (105) der Fertigwalzstraße (45) nachgeordnet ist,
- wobei die Fertigwalzstraße (45) Teil der ersten Transporteinrichtung (65) ist und dazu eingerichtet ist, das Vorwalzbandstück (185) in dem ersten Betriebszustand zu der Ausfördereinrichtung (76) zu transportieren,
- wobei die Ausfördereinrichtung (76) ausgebildet ist, das Vorwalzbandstück (185) auszufördern,
- wobei die Fertigwalzstraße (45) in dem zweiten Betriebszustand ausgebildet ist, den zweiten Teilabschnitt (180) in ein Fertigwalzband (190) zu walzen.

8. Gieß-Walz-Verbundanlage (10) nach Anspruch 7,
- wobei die Abschreckeinrichtung (70) bezogen auf die Förderrichtung des Vorwalzbands (105) zwischen der Vorwalzstraße (30) und der Fertigwalzstraße (45) angeordnet ist,
- wobei im ersten Betriebszustand die Fertigwalzstraße (45) ausgebildet ist, das abgeschreckte Vorwalzbandstück (185) zu der Ausfördereinrichtung (70) zu transportieren.

9. Gieß-Walz-Verbundanlage (10) nach Anspruch 7,
- wobei die Abschreckeinrichtung (76) bezogen auf die Förderrichtung des Fertigwalzbands (190) zwischen der Fertigwalzstraße (45) und Ausfördereinrichtung (76) ist,
- wobei die Trenneinrichtung (31) zwischen der Vorwalzstraße (30) und der Fertigwalzstraße (45) angeordnet ist,
- wobei in dem ersten Betriebszustand die Fertigwalzstraße (45) ausgebildet ist, einen Querschnitt des Vorwalzbandstücks (185) aufrecht zu erhalten.

10. Verfahren zum Betrieb einer Gieß-Walz-Verbundanlage (10) nach einem der vorhergehenden Ansprüche,
- wobei ein endlos stranggegossener Warmstrang (95) in der Vorwalzstraße (30) zu einem Vorwalzband (105) gewalzt wird,
- wobei die Trenneinrichtung (31) einen ersten Teilabschnitt (175) des Vorwalzbands (105) in ein Vorwalzbandstück (185) stückelt,
- wobei die Ausfördereinrichtung (76) das Vorwalzbandstück (185) ausfördert,
- wobei die erste Transporteinrichtung (65) das Vorwalzbandstück (185) von der Trenneinrichtung (31) zu der Abschreckeinrichtung (70) transportiert,
- wobei die Abschreckeinrichtung (70) das Vorwalzbandstück (185) mit der Kühlflüssigkeit (165) abschreckt.

11. Verfahren nach Anspruch 10,
- wobei das Vorwalzbandstück (185) der Kühlflüssigkeit (165) für ein vordefiniertes erstes Zeitintervall (t1) ausgesetzt wird und während des ersten Zeitintervalls (t1) eine Randschicht (192) des Vorwalzbandstücks (185) abgeschreckt wird,
- wobei nach Abschrecken des Vorwalzbandstücks (185) das Vorwalzbandstück (185) für ein zweites vordefiniertes Zeitintervall (t2) gelagert wird und der Kern (191) die abgeschreckte Randschicht (192) wieder erwärmt,
- wobei nach Ablauf des zweiten Zeitintervalls (t2) das Vorwalzbandstück (185) erneut der Kühlflüssigkeit (165) für ein drittes vordefiniertes Zeitintervall (t3) ausgesetzt und abgeschreckt wird.

12. Verfahren nach Anspruch 11,
- wobei während des ersten Zeitintervalls (t1) die Randschicht (192) des Vorwalzbandstücks (185) von einer ersten Temperatur (T₁) zwischen 1050° C und 1200°C auf eine zweite Temperatur (T₂) von 150°C bis 400°C abgeschreckt wird,
- wobei der Kern (191) des Vorwalzbandstücks (185) die Randschicht (192) im zweiten Zeitintervall (t2) auf eine dritte Temperatur (T₃) zwischen 400°C und 600°C erwärmt,
- wobei im dritten Zeitintervall (t3) die Randschicht (192) auf eine vierte Temperatur (T₄) zwischen 100°C und 200°C abgeschreckt wird.

13. Verfahren nach einem der Ansprüche 10 bis 12,
- wobei eine lokale Gießgeschwindigkeit (v) über einen Guss des Warmstrangs (95) aus einer metallischen Schmelze (90) ermittelt wird,
- wobei die lokale Gießgeschwindigkeit (v) einer Vorwalzbandposition des Vorwalzbands (105) zugeordnet wird,
wobei der erste Teilabschnitt (175) des Vorwalzbands (105) mit einer lokalen Gießgeschwindigkeit (v) unterhalb einer vordefinierten Mindestgießgeschwindigkeit ermittelt wird.

14. Verfahren nach Anspruch 13
- , wobei die Gieß-Walz-Verbundanlage (10) nach einem der Ansprüche 6 bis 9 betrieben wird,
- wobei ein zweiter Teilabschnitt (180) des Vorwalzbands (105) mit einer lokalen Gießgeschwindigkeit (v) oberhalb der vordefinierten Mindestgießgeschwindigkeit ermittelt wird,
- wobei der zweite Teilabschnitt (180) der Fertigwalzstraße (45) zugeführt wird,
- wobei die Fertigwalzstraße (45) ausgebildet ist, den zweiten Teilabschnitt (180) zu dem Fertigwalzband fertig zu walzen.

## Claims

1. Combined casting and rolling installation (10) for producing a hot-rolled product from a continuously continuously cast hot billet (95),
- comprising a rough-rolling mill train (30), a discharging device (76), a first transporting device (65) and at least one severing device (31),
- wherein the rough-rolling mill train (30) is configured to roll a continuously cast hot billet (95) to form a rough-rolled strip (105),
- wherein the discharging device (76) is arranged downstream of the rough-rolling mill train (30) with respect to a conveying direction of the rough-rolled strip (105) of the rough-rolling mill train (30) and the severing device (31) is arranged between the rough-rolling mill train (30) and the discharging device (76),
- wherein the severing device (31) is configured to cut up a first sub-portion (175) of the rough-rolled strip (105) into a rough-rolled strip piece (185),
- wherein the discharging device (76) is configured to discharge the rough-rolled strip piece (185),
**characterized by**
- a quenching device (70),
- wherein the first transporting device (65) connects the severing device (31) to the quenching device (70) and is configured to transport the rough-rolled strip piece (185) to the quenching device (70),
- wherein the quenching device (70) is configured to quench the rough-rolled strip piece (185).

2. Combined casting and rolling installation (10) according to Claim 1,
- wherein the quenching device (70) comprises a quenching tank (160) and a lifting device (170),
- wherein the quenching tank (160) can be filled with a cooling liquid (165), preferably with a cooling water,
- wherein the lifting device (170) adjoins the first transporting device (65) in a conveying direction of the rough-rolled strip piece (185) and is configured to lower the rough-rolled strip piece (185) into the quenching tank (160) for quenching of the rough-rolled strip piece (185) for a predefined first time interval (t1) and to lift said rough-rolled strip piece out of the quenching tank (160) after the first time interval (t1) has expired.

3. Combined casting and rolling installation (10) according to Claim 2,
- wherein the lifting device (170) is configured to hold the rough-rolled strip piece (185) outside of the cooling liquid (165) for a predefined second time interval (t2),
- wherein the lifting device (170) is configured to lower the rough-rolled strip piece (185) into the quenching tank (160) again for a third time interval (t3) after the second time interval (t2) has expired and to lift said rough-rolled strip piece out of the quenching tank (160) again after the third time interval (t3) has expired.

4. Combined casting and rolling installation (10) according to one of the preceding claims,
- wherein the quenching device (70) comprises at least one quenching unit (200),
- wherein the rough-rolled strip piece (185) can be transported through the quenching unit (200) at a predefined rate (v),
- wherein the quenching unit (200) is configured to spray a cooling liquid (165), preferably water and/or liquid nitrogen, in a directed manner onto the rough-rolled strip piece (185) for quenching of the rough-rolled strip piece (185).

5. Combined casting and rolling installation (10) according to one of the preceding claims,
- comprising a rough-rolled strip piece storage unit (80) and a second transporting device (75),
- wherein the second transporting device (75) is arranged at least between the rough-rolled strip piece storage unit (80) and the quenching device (70),
- wherein the second transporting device (75) is configured to transport the rough-rolled strip piece (185) from the quenching device (70) to the rough-rolled strip piece storage unit (80),
- wherein the rough-rolled strip piece storage unit (80) is configured to store the rough-rolled strip piece (185) for at least 12 hours, preferably for at least 24 hours.

6. Combined casting and rolling installation (10) according to one of the preceding claims,
- comprising a finishing rolling mill train (45),
- wherein the finishing rolling mill train (45) is arranged downstream of the discharging device (76) with respect to the conveying direction of the rough-rolled strip (105),
- wherein the finishing rolling mill train (45) is arranged parallel to the quenching device (70),
- wherein a second sub-portion (180) of the rough-rolled strip (105) can be supplied to the finishing rolling mill train (45),
- wherein the finishing rolling mill train (45) is configured to roll the second sub-portion (180) into a finish-rolled strip (190),
- wherein the discharging device (76) is configured to transfer the rough-rolled strip piece (185) to the first transporting device (65),
- wherein the first transporting device (65) is configured to transport the rough-rolled strip piece (185) to the quenching device (70).

7. Combined casting and rolling installation (10) according to one of Claims 1 to 5,
- comprising a finishing rolling mill train (45),
- wherein the finishing rolling mill train (45) is arranged downstream of the rough-rolling mill train (30) with respect to the conveying direction of the rough-rolled strip (105),
- wherein a second sub-portion (180) of the rough-rolled strip (105) can be supplied to the finishing rolling mill train (45),
- wherein the finishing rolling mill train (45) has a first operating state and a second operating state which differs from the first operating state,
- wherein the discharging device (76) is arranged downstream of the finishing rolling mill train (45) with respect to the conveying direction of the rough-rolled strip (105),
- wherein the finishing rolling mill train (45) is part of the first transporting device (65) and is configured, in the first operating state, to transport the rough-rolled strip piece (185) to the discharging device (76),
- wherein the discharging device (76) is configured to discharge the rough-rolled strip piece (185),
- wherein the finishing rolling mill train (45) is configured, in the second operating state, to roll the second sub-portion (180) into a finish-rolled strip (190) .

8. Combined casting and rolling installation (10) according to Claim 7,
- wherein the quenching device (70) is arranged between the rough-rolling mill train (30) and the finishing rolling mill train (45) with respect to the conveying direction of the rough-rolled strip (105),
- wherein, in the first operating state, the finishing rolling mill train (45) is configured to transport the quenched rough-rolled strip piece (185) to the discharging device (70).

9. Combined casting and rolling installation (10) according to Claim 7,
- wherein the quenching device (76) is between the finishing rolling mill train (45) and the discharging device (76) with respect to the conveying direction of the finish-rolled strip (190),
- wherein the severing device (31) is arranged between the rough-rolling mill train (30) and the finishing rolling mill train (45),
- wherein, in the first operating state, the finishing rolling mill train (45) is configured to maintain a cross section of the rough-rolled strip piece (185).

10. Method for operating a combined casting and rolling installation (10) according to one of the preceding claims,
- wherein a continuously continuously cast hot billet (95) is rolled in the rough-rolling mill train (30) to form a rough-rolled strip (105),
- wherein the severing device (31) cuts a first sub-portion (175) of the rough-rolled strip (105) into a rough-rolled strip piece (185),
- wherein the discharging device (76) discharges the rough-rolled strip piece (185),
- wherein the first transporting device (65) transports the rough-rolled strip piece (185) from the severing device (31) to the quenching device (70),
- wherein the quenching device (70) quenches the rough-rolled strip piece (185) by means of the cooling liquid (165) .

11. Method according to Claim 10,
- wherein the rough-rolled strip piece (185) is exposed to the cooling liquid (165) for a predefined first time interval (t1), and an outer layer (192) of the rough-rolled strip piece (185) is quenched during the first time interval (t1),
- wherein, after the rough-rolled strip piece (185) has been quenched, the rough-rolled strip piece (185) is stored for a second predefined time interval (t2) and the core (191) heats the quenched outer layer (192) again,
- wherein, after the second time interval (t2) has expired, the rough-rolled strip piece (185) is again exposed to the cooling liquid (165) for a third predefined time interval (t3) and quenched.

12. Method according to Claim 11,
- wherein, during the first time interval (t1), the outer layer (192) of the rough-rolled strip piece (185) is quenched from a first temperature (T₁) of between 1050°C and 1200°C to a second temperature (T₂) of 150°C to 400°C,
- wherein the core (191) of the rough-rolled strip piece (185) heats the outer layer (192) in the second time interval (t2) to a third temperature (T₃) of between 400°C and 600°C,
- wherein, in the third time interval (t3), the outer layer (192) is quenched to a fourth temperature (T₄) of between 100°C and 200°C.

13. Method according to one of Claims 10 to 12,
- wherein a local casting rate (v) is ascertained over an operation of casting the hot billet (95) from a metallic melt (90),
- wherein the local casting rate (v) is assigned to a rough-rolled strip position of the rough-rolled strip (105),
wherein the first sub-portion (175) of the rough-rolled strip (105) with a local casting rate (v) below a predefined minimum casting rate is ascertained.

14. Method according to Claim 13,
- wherein the combined casting and rolling installation (10) according to one of Claims 6 to 9 is operated,
- wherein a second sub-portion (180) of the rough-rolled strip (105) with a local casting rate (v) above the predefined minimum casting rate is ascertained,
- wherein the second sub-portion (180) is supplied to the finishing rolling mill train (45),
- wherein the finishing rolling mill train (45) is configured to finish-roll the second sub-portion (180) to form the finish-rolled strip.

## Revendications

1. Installation combinée de coulée et de laminage (10) destinée à la fabrication d'un produit laminé à chaud à partir d'une barre chaude coulée en continu sans fin (95),
- présentant un train de prélaminage (30), un dispositif d'évacuation (76), un premier dispositif de transport (65) et au moins un dispositif de séparation (31),
- dans laquelle le train de prélaminage (30) est réalisé pour laminer une barre chaude coulée en continu (95) en une bande de prélaminage (105),
- dans laquelle le dispositif d'évacuation (76) est disposé en aval du train de prélaminage (30) par rapport à une direction de transport de la bande de prélaminage (105) du train de prélaminage (30) et le dispositif de séparation (31) est disposé entre le train de prélaminage (30) et le dispositif d'évacuation (76),
- dans laquelle le dispositif de séparation (31) est réalisé pour diviser une première section (175) de la bande de prélaminage (105) en une pièce de bande de prélaminage (185),
- dans laquelle le dispositif d'évacuation (76) est réalisé pour évacuer la pièce de bande de prélaminage (185),
**caractérisée par**
- un dispositif de trempe (70),
- dans laquelle le premier dispositif de transport (65) relie le dispositif de séparation (31) au dispositif de trempe (70) et est réalisé pour transporter la pièce de bande de prélaminage (185) vers le dispositif de trempe (70),
- dans laquelle le dispositif de trempe (70) est réalisé pour tremper la pièce de bande de prélaminage (185).

2. Installation combinée de coulée et de laminage (10) selon la revendication 1,
- dans laquelle le dispositif de trempe (70) présente un bassin de trempe (160) et un dispositif de levage (170),
- dans laquelle le bassin de trempe (160) peut être rempli avec un liquide de refroidissement (165), de préférence avec de l'eau de refroidissement,
- dans laquelle le dispositif de levage (170) se raccorde dans la direction de transport de la pièce de bande de prélaminage (185) au premier dispositif de transport (65) et est réalisé pour abaisser la pièce de bande de prélaminage (185) dans le bassin de trempe (160) destinée à la trempe de la pièce de bande de prélaminage (185) pendant un premier intervalle de temps prédéfini (t1) et pour la soulever du bassin de trempe (160) après l'écoulement du premier intervalle de temps (t1).

3. Installation combinée de coulée et de laminage (10) selon la revendication 2,
- dans laquelle le dispositif de levage (170) est réalisé pour maintenir la pièce de bande de prélaminage (185) à l'extérieur du liquide de refroidissement (165) pendant un deuxième intervalle de temps prédéfini (t2),
- dans laquelle le dispositif de levage (170) est réalisé pour de nouveau abaisser la pièce de bande de prélaminage (185) après l'écoulement du deuxième intervalle de temps (t2) dans le bassin de trempe (160) pendant un troisième intervalle de temps (t3) et de nouveau la soulever du bassin de trempe (160) après l'écoulement du troisième intervalle de temps (t3).

4. Installation combinée de coulée et de laminage (10) selon l'une quelconque des revendications précédentes,
- dans laquelle le dispositif de trempe (70) présente au moins un agrégat de trempe (200),
- dans laquelle la pièce de bande de prélaminage (185) peut être transportée à une vitesse prédéfinie (v) par le biais de l'agrégat de trempe (200),
- dans laquelle l'agrégat de trempe (200) est réalisé pour injecter un liquide de refroidissement (165), de préférence de l'eau et/ou de l'azote liquide, dirigé sur la pièce de bande de prélaminage (185) pour la trempe de la pièce de bande de prélaminage.

5. Installation combinée de coulée et de laminage (10) selon l'une quelconque des revendications précédentes,
- présentant un palier de pièce de bande de prélaminage (80) et un second dispositif de transport (75),
- dans laquelle le second dispositif de transport (75) est disposé au moins entre le palier de pièce de bande de prélaminage (80) et le dispositif de trempe (70),
- dans laquelle le second dispositif de transport (75) est réalisé pour transporter la pièce de bande de prélaminage (185) depuis le dispositif de trempe (70) vers le palier de pièce de bande de prélaminage (80),
- dans laquelle le palier de pièce de bande de prélaminage (80) est réalisé pour entreposer la pièce de bande de prélaminage (185) pendant au moins 12 heures, de préférence pendant au moins 24 heures.

6. Installation combinée de coulée et de laminage (10) selon l'une quelconque des revendications précédentes,
- présentant un train de laminage de finition (45),
- dans laquelle le train de laminage de finition (45) est disposé en aval du dispositif d'évacuation (76) par rapport à la direction de transport de la bande de prélaminage (105),
- dans laquelle le train de laminage de finition (45) est disposé parallèlement au dispositif de trempe (70),
- dans laquelle le train de laminage de finition (45) peut être acheminé vers une seconde section (180) de la bande de prélaminage (105),
- dans laquelle le train de laminage de finition (45) est réalisé pour laminer la seconde section (180) en une bande de laminage de finition (190),
- dans laquelle le dispositif d'évacuation (76) est réalisé pour transmettre la pièce de bande de prélaminage (185) au premier dispositif de transport (65),
- dans laquelle le premier dispositif de transport (65) est réalisé pour transporter la pièce de bande de prélaminage (185) vers le dispositif de trempe (70).

7. Installation combinée de coulée et de laminage (10) selon l'une quelconque des revendications 1 à 5,
- présentant un train de laminage de finition (45),
- dans laquelle le train de laminage de finition (45) est disposé en aval du train de prélaminage (30) par rapport à la direction de transport de la bande de prélaminage (105),
- dans laquelle une seconde section (180) de la bande de prélaminage (105) peut être acheminée vers le train de laminage de finition (45),
- dans laquelle le train de laminage de finition (45) présente un premier état de fonctionnement et un second état de fonctionnement différent du premier état de fonctionnement,
- dans laquelle le dispositif d'évacuation (76) est disposé en aval du train de laminage de finition (45) par rapport à la direction de transport de la bande de prélaminage (105),
- dans laquelle le train de laminage de finition (45) fait partie du premier dispositif de transport (65) et est configuré pour transporter dans le premier état de fonctionnement la pièce de bande de prélaminage (185) vers le dispositif d'évacuation (76),
- dans laquelle le dispositif d'évacuation (76) est réalisé pour évacuer la pièce de bande de prélaminage (185),
- dans laquelle le train de laminage de finition (45) est réalisé dans le second état de fonctionnement pour laminer la seconde section (180) en une bande de laminage de finition (190).

8. Installation combinée de coulée et de laminage (10) selon la revendication 7,
- dans laquelle le dispositif de trempe (70) est disposé entre le train de prélaminage (30) et le train de laminage de finition (45) par rapport à la direction de transport de la bande de prélaminage (105),
- dans laquelle dans le premier état de fonctionnement le train de laminage de finition (45) est réalisé pour transporter la pièce de bande de prélaminage trempée (185) vers le dispositif d'évacuation (70).

9. Installation combinée de coulée et de laminage (10) selon la revendication 7,
- dans laquelle le dispositif de trempe (76) est entre le train de laminage de finition (45) et le dispositif d'évacuation (76) par rapport à la direction de transport de la bande de laminage de finition (190),
- dans laquelle le dispositif de séparation (31) est disposé entre le train de prélaminage (30) et le train de laminage de finition (45),
- dans laquelle dans le premier état de fonctionnement le train de laminage de finition (45) est réalisé pour maintenir droite une section transversale de la pièce de bande de prélaminage (185).

10. Procédé destiné au fonctionnement d'une installation combinée de coulée et de laminage (10) selon l'une quelconque des revendications précédentes,
- dans lequel un produit laminé à chaud à coulée continue sans fin (95) dans le train de prélaminage (30) est laminé en une bande de prélaminage (105),
- dans lequel le dispositif de séparation (31) coupe une première section (175) de la bande de prélaminage (105) en une pièce de bande de prélaminage (185),
- dans lequel le dispositif d'évacuation (76) évacue la pièce de bande de prélaminage (185),
- dans lequel le premier dispositif de transport (65) transporte la pièce de bande de prélaminage (185) depuis le dispositif de séparation (31) vers le dispositif de trempe (70),
- dans lequel le dispositif de trempe (70) trempe la pièce de bande de prélaminage (185) avec le liquide de refroidissement (165).

11. Procédé selon la revendication 10,
- dans lequel la pièce de bande de prélaminage (185) est exposée au liquide de refroidissement (165) pendant un premier intervalle de temps prédéfini (t1) et pendant ce premier intervalle de temps (t1) une couche périphérique (192) de la pièce de bande de prélaminage (185) est trempée,
- dans lequel après la trempe de la pièce de bande de prélaminage (185) la pièce de bande de prélaminage (185) est entreposée pendant un deuxième intervalle de temps prédéfini (t2) et le noyau (191) réchauffe de nouveau la couche périphérique trempée (192),
- dans lequel après l'écoulement du deuxième intervalle de temps (t2) la pièce de bande de prélaminage (185) est de nouveau exposée au liquide de refroidissement (165) et est trempée pendant un troisième intervalle de temps prédéfini (t3).

12. Procédé selon la revendication 11,
- dans lequel pendant le premier intervalle de temps (t1) la couche périphérique (192) de la pièce de bande de prélaminage (185) est trempée d'une première température (T₁) entre 1050 °C et 1200 °C jusqu'à une seconde température (T₂) de 150 °C à 400 °C,
- dans lequel le noyau (191) de la pièce de bande de prélaminage (185) réchauffe la couche périphérique (192) dans le deuxième intervalle de temps (t2) jusqu'à une troisième température (T₃) entre 400 °C et 600 °C,
- dans lequel dans le troisième intervalle de temps (t3) la couche périphérique (192) est trempée jusqu'à une quatrième température (T₄) entre 100 °C et 200 °C.

13. Procédé selon l'une quelconque des revendications 10 à 12,
- dans lequel une vitesse de coulée locale (v) est déterminée à partir d'une masse métallique en fusion (90) par l'intermédiaire d'une coulée de la barre chaude (95),
- dans lequel la vitesse de coulée locale (v) est associée à une position de bande de prélaminage de la bande de prélaminage (105),
dans lequel la première section (175) de la bande de prélaminage (105) est déterminée avec une vitesse de coulée locale (v) en dessous d'une vitesse de coulée minimale prédéfinie.

14. Procédé selon la revendication 13 dans lequel l'installation combinée de coulée et de laminage (10) selon l'une quelconque des revendications 6 à 9 est exploitée,
- dans lequel une seconde section (180) de la bande de prélaminage (105) est déterminée avec une vitesse de coulée locale (v) supérieure à la vitesse de coulée minimale,
- dans lequel la seconde section (180) est acheminée vers le train de laminage de finition (45),
- dans lequel le train de laminage de finition (45) est réalisé pour finaliser le laminage de la seconde section (180) en la bande de laminage de finition.
